(19) Europäisches Patentamt
European Patent Office
Office européen des brevets

(11) **EP 3 980 498 B1**

(12) **EUROPÄISCHE PATENTSCHRIFT**

(45) Veröffentlichungstag und Bekanntmachung des Hinweises auf die Patenterteilung:
**27.09.2023 Patentblatt 2023/39**

(21) Anmeldenummer: **20730587.1**

(22) Anmeldetag: **29.05.2020**

(51) Internationale Patentklassifikation (IPC):
**C09D 5/00** (2006.01)

(52) Gemeinsame Patentklassifikation (CPC):
**C09D 5/00**

(86) Internationale Anmeldenummer:
**PCT/EP2020/065000**

(87) Internationale Veröffentlichungsnummer:
**WO 2020/245045 (10.12.2020 Gazette 2020/50)**

(54) **RHEOLOGIEKONTROLLIERBARES KORROSIONSSCHUTZMITTEL MIT WAESSRIGER BASIS**

RHEOLOGY-CONTROLLABLE ANTI-CORROSION AGENT WITH AN AQUEOUS BASE

AGENT DE PROTECTION CONTRE LA CORROSION CONTRÔLABLE PAR RHÉOLOGIE À BASE AQUEUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2019 DE 102019115604**

(43) Veröffentlichungstag der Anmeldung:
**13.04.2022 Patentblatt 2022/15**

(73) Patentinhaber: **Pfinder KG**
**71032 Böblingen (DE)**

(72) Erfinder:
• **GRUSECK, Daniel**
**71065 Sindelfingen (DE)**
• **WENZEL, Hans-Joerg**
**70499 Stuttgart (DE)**
• **BUECKER, Markus**
**70174 Stuttgart (DE)**
• **SCHALLER, Christian**
**73765 Neuhausen (DE)**

(74) Vertreter: **Witte, Weller & Partner Patentanwälte mbB**
**Postfach 10 54 62**
**70047 Stuttgart (DE)**

(56) Entgegenhaltungen:
EP-A1- 1 842 881   EP-A1- 2 047 981
WO-A1-97/15499   CN-A- 106 800 784
DE-A1- 19 541 907   JP-A- H03 126 773
US-B1- 10 000 643

**Beschreibung**

Die vorliegende Erfindung betrifft ein Korrosionsschutzmittel auf wässriger Basis und ein Verfahren zu dessen Herstellung. Das wasserbasierende Korrosionsschutzmittel ist ein Hohlraumkonservierungsmittel, ein Mittel zur Unterbodenschutzbeschichtung, ein Mittel zur permanenten Lager- und Transportschutzbeschichtung, oder ein Mittel zur temporären Lager- und Transportschutzbeschichtung, wobei das wasserbasierende Korrosionsschutzmittel für den Korrosionsschutz eines Bauteils, insbesondere Kraftfahrzeugteils, vorgesehen ist, wobei das wasserbasierende Korrosionsschutzmittel kalt applizierbar ist, reversibel gelierend und physikalisch trocknend, auch bei dicken Schichten, und rheologisch steuerbar, anwendungsbezogen einstellbar ist.

Die wässrige Hohlraumkonservierung (wHRK) ist ein wasserbasierendes System für den Korrosionsschutz von Hohlräumen im Fahrzeugbau. Besonders die im Schatten der Feldlinien liegenden Bereiche wie Blechdopplungen, Flansche, Siggen oder anderweitig gefügte Metallbauteile verfügen über unzureichenden oder keinen Korrosionsschutz durch den elektrophoretisch abgeschiedenen Tauchlack (KTL). Dort liegen die Substratoberflächen aufgrund der nasschemischen Vorbehandlung (Aktivierung) im Regelfall blank und damit hochreaktiv vor.

Der korrosionsschützende Effekt der wHRK beruht auf einer Barrierewirkung des Trockenfilms aufgrund einer hohen Hydrophobie, die durch den Einsatz von Ölen und Wachsen realisiert wird. Um diese lipophilen Komponenten mit dem Wasser zu der wHRK zu verbinden, werden Emulgatoren verwendet.

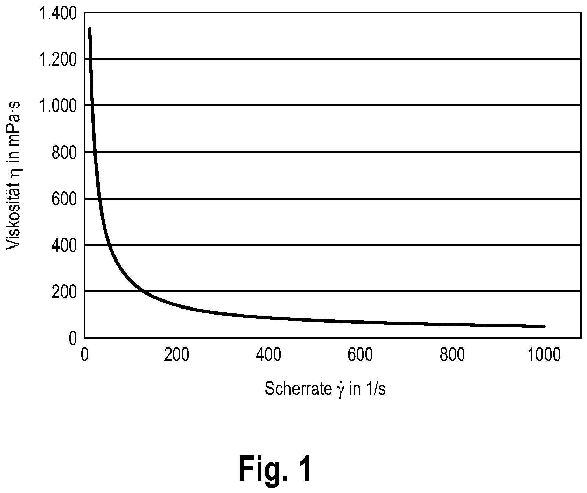

Die wHRK ist eine technische Emulsion, deren bestimmte rheologische Eigenschaften für die obenstehende Verwendung unabdingbar sind. So sind die thixotrope Eigenschaft und das reversibel relaxierende Verhalten der wHRK nach Druck- und Scherbelastung kennzeichnend für dieses System. Diese sind die beiden wesentlich Eigenschaften, welche die wHRK für den Einsatzzweck in Hohlräumen prädestinieren. Durch eine wechselwirkungsbedingte Gelbildung der Flüssigphase, verfügt die wHRK über eine extreme Langzeitstabilität und ist lange lagerfähig ohne zu separieren oder andere emulsionsverändernde Vorgänge aufzuweisen (Gruseck, D. (2018): Untersuchung der Rheologie und Filmbildung eines wasserbasierenden Korrosionsschutzsystems am Beispiel einer Wachs-Dispersion, Dissertation, Universität Paderborn). Infolge einer mechanischen Belastung über die Peripherie zum Applikator und der anschließenden Zerstäubung verflüssigt sich das Gel nahezu vollständig und die Viskosität fällt signifikant ab, wie aus der Fig. 1 ersichtlich wird.

Hieraus ist die Abnahme der Viskosität mit steigender Schergeschwindigkeit bis $\dot{\gamma}$ = 1.000 s$^{-1}$ zu entnehmen. Dadurch wird eine nahezu vollständige Zerscherung ehemals vorhandener Strukturen erreicht. Diese Eigenschaft ist für die sich anschließende Penetration in kleinste Spalten und Falze von hoher Bedeutung. Überschüsse laufen über konstruktiv eingebrachte Auslauflöcher wieder aus der Karosse ab.

Da allerdings eine entsprechende, zu verfilmende Restmenge im Bauteil verbleiben muss, verfügt das System über die Charakteristik eines Strukturaufbaus nach mechanischer oder Druckbelastung. Erst durch ein ausgewogenes Verhältnis von wachsartigen Körperstoffen, funktionellen Wachsen, Bindemitteln und diversen, grenzflächenaktiven Substanzen, wird es ermöglicht ein derartiges Gemisch stabil zu formulieren.

Die DE 195 41 907 A1 offenbart ein Verfahren zur Herstellung von wachsartigen und/oder bitumenartigen Überzügen, gekennzeichnet durch Elektroabscheidung aus einer ionisch stabilisierten wässrigen Dispersion von Wachs und/oder Bitumen und/oder wachsartigen und/oder bitumenartigen Stoffen auf einem in die Dispersion eingetauchten, elektrisch leitfähigen Substrat, wobei man den erhaltenen Überzug nach dem Austauchen und gegebenenfalls Spülen zur Bildung einer geschlossenen Oberfläche durch Erwärmen versintert oder schmilzt.

Die CN 106800784 A offenbart eine Zusammensetzung zum Korrosionsschutz im Automobilbereich, die 1-10 Gew.-% eines wachsartigen Materials, 1-20 Gew.-% eines ungesättigten Harzes, 1-20 Gew.-% eines hochbasischen Sulfonats, 1-5 Gew.-% eines Rostschutzpigments, 3-8 Gew.-% eines oberflächenaktiven Mittels und 40-70 Gew.-% Wasser aufweist.

Die aus dem Stand der Technik bekannten wässrigen Hohlraumkonservierungen weisen den Nachteil auf, dass Anpassungen relevanter Produkteigenschaften, insbesondere der Viskosität und/oder Schergeschwindigkeit, gemäß der jeweiligen Applikation bzw. Kundenerfordernis nicht ohne weiteres möglich ist. Die Betrachtungsweise über den klassischen Ansatz dualer Systeme oder ternärer Systeme, letzteres bestehend aus Wasser, Öl-Phase und Tensiden, ist im vorliegenden Fall nicht zielführend. Eine Vereinfachung der Rezeptur liefert keine Ergebnisse zur Ursachenfindung der Systemcharakteristika. Die so gewonnenen Dispersionen weisen keine der gewünschten Eigenschaften auf oder sind von vornherein instabil. US 10 000 643 B1 offenbart ein Pigment/Additiv, das Phenothiazinverbindungen mit diskretem mehrwertigem Oxidationszustand mit korrosionsinhibierenden Eigenschaften umfasst. Diese Phenothiazine sind nützlich bei der Herstellung von Grundierungsbeschichtungsformulierungen auf Wasserbasis zum Auftragen auf Metalle und Metalllegierungen und zeigen korrosionshemmende Eigenschaften. Darüber hinaus sind solche Formulierungen chromatfrei und haben einen reduzierten VOC-Gehalt. Verfahren zur Herstellung und Verwendung solcher Verbindungen und Formulierungen auf Wasserbasis werden ebenfalls beschrieben. DE 195 41 907 A1 offenbart ein Verfahren zur Herstellung wachsartiger Beschichtungen durch galvanische Abscheidung aus einer ionisch stabilisierten wässrigen Dispersion von Wachs und/oder wachsartigen Zubereitungen auf einem in die Dispersion getauchten elektrisch leitfähigen Substrat. Nach dem Entfernen aus der Dispersion und gegebenenfalls Spülen wird die resultierende Beschichtung gesintert oder durch Erhitzen zu einer geschlossenen Oberfläche verschmolzen. CN 106 800 784 A offenbart eine Korrosionsschutz-Wachszusammensetzung auf Wasserbasis, die sich in Masseprozent aus folgenden Komponenten zusammensetzt: 1-10 % wachsartiges Material, 1-20 % ungesättigtes Harz, 1-20 % hochbasenzahliges Sulfonat, 1-5 % Rostschutzpigment, 3-8 % Tensid und 40-70 % Wasser. Die Korrosionsschutz-Wachszusammensetzung auf Wasserbasis wird auf Fahrgestelle, Hohlräume, Scharniere und andere Positionen in der Autoindustrie aufgetragen. Verglichen mit dem herkömmlichen Rostschutzwachs vom Lösungsmitteltyp ist die Korrosionsschutzwachszusammensetzung vorteilhafter für die Umwelt und die Sicherheit. Verglichen mit der Rostschutzwachsemulsion hat die Korrosionsschutzwachszusammensetzung eine bessere Wasserbeständigkeit und Korrosionsbeständigkeit. EP 2 047 981 A1 offenbart ein Aluminiumlegierungsmaterial mit ausgezeichneter Meerwasser-Korrosionsbeständigkeit umfasst ein Aluminiumlegierungssubstrat, dessen durchschnittliche Zehn-Punkte-Oberflächenrauhigkeit Rz, die der Durchschnitt der fünf größten Gipfelzu-Tal-Abstände auf der Oberfläche ist, auf 0,3 &mgr;m oder mehr eingestellt ist. einen organischen Phosphonsäure-Primerfilm, der auf einer Oberfläche des Aluminiumlegierungssubstrats gebildet ist, und einen Fluorharz-Lackfilm, der auf dem Primerfilm gebildet ist und eine Trockenmitteldicke von 1 bis 100 &mgr;m aufweist. Es wird auch ein Plattenwärmetauscher mit ausgezeichneter Meerwasser-Korrosionsbeständigkeit bereitgestellt, bei dem das Aluminiumlegierungsmaterial als Wärmeübertragungseinheit unter Verwendung von Meerwasser als Kühlwasser verwendet wird. EP 1 842 881 A1 offenbart eine korrosionsbeständige Grundierungszusammensetzung auf Wasserbasis besteht aus einem Harzsystem auf Wasserbasis; ein optionales Härtungsmittel; und ein chromatfreies korrosionshemmendes Additiv. Das chromatfreie korrosionshemmende Additiv umfasst mindestens einen anodischen Korrosionsinhibitor, einen kathodischen Korrosionsinhibitor und einen Metallkomplexbildner. Der Metallkomplexbildner erhöht die Löslichkeit von mindestens einem der anodischen und kathodischen Korrosionsinhibitoren. WO 97/15499 A1 offenbart ein Verfahren zum Schützen von Außenflächen von Kraftfahrzeugen und anderen Produkten oder Komponenten von Produkten gegen Abrieb, abrasiven Staub, Wasser, sauren Regen usw. bereitgestellt. Die Verfahren umfassen das Aufbringen einer Schutzbeschichtungszusammensetzung auf eine Oberfläche, die eine Emulsion umfasst, die aus der Gruppe ausgewählt ist, die aus einer Vinyl-Acryl-Copolymer-Emulsion und einer Vinylacetat-Ethylen-Emulsion besteht. Die Emulsion wird getrocknet, um eine wasserbeständige Schutzschicht zu bilden, die von der darunter liegenden Oberfläche durch Abziehen entfernt werden kann, wenn sie nicht mehr erwünscht ist. JP H03 126773 A offenbart den Erhalt eines Polymers mit guter Polymerisationsstabilität durch Emulsionspolymerisation von jeweiligen spezifischen zwei Monomerkomponenten als Kern- und Hüllenkomponenten in Gegenwart eines kationischen reaktiven Emulgators und einer wasserlöslichen Azoamidverbindung als Polymerisationsinitiator. In Gegenwart eines kationisch reaktiven Emulgators und einer wasserlöslichen Azoamidverbindung als Polymerisationsinitiator wird (A) eine Monomerkomponente, bestehend aus (1) einer hydrolysierbaren Alkoxysilangruppe enthaltend, polymerisierbares ungesättigtes Vinylsilanmonomer, (2) ein polymerisierbares ungesättigtes Monomer, das sowohl eine Vinyldoppelbindung als auch eine Hydroxylgruppe enthält, und (3) ein weiteres polymerisierbares ungesättigtes Monomer einer Emulsionspolymerisation unterzogen werden. Anschließend (B) eine zweite Monomerkomponente, die aus (4) einem (Poly)isocyanat besteht. (5) ein aminogruppenhaltiges. polymerisierbares ungesättigtes Monomer und die oben erwähnten Komponenten (2) und (3) werden einer Emulsionspolymerisation unterzogen, wodurch das angestrebte gelierte körnige Polymer erhalten wird.

Mithin besteht eine Aufgabe der vorliegenden Erfindung wässrige Hohlraumkonservierungen und ein Verfahren zur Herstellung wässriger Hohlraumkonservierungen bereitzustellen, deren Eigenschaften ohne weiteres an die jeweilige Applikation, insbesondere entsprechend der Geometrie des zu beschichtenden Bauteils, bzw. Kundenerfordernis angepasst werden können. Eine weitere Aufgabe der vorliegenden Erfindung besteht in der Bereitstellung einer wässrigen Hohlraumkonservierung und eines Verfahrens zur Herstellung wässriger Hohlraumkonservierungen, die an (bereits) vorhandene technische Gegebenheiten zur Aufbringung von Hohlraumkonservierungen, bspw. kundenseitig vorhandene Lackierungsstraßen, angepasst werden können und mithin entweder keine Änderung, lediglich geringfügige Änderungen oder sogar eine Vereinfachung, der technischen Gegebenheiten erfordern.

Ferner werden die vorstehend genannten Aufgaben der vorliegenden Erfindung durch die Bereitstellung eines wasserbasierenden Korrosionsschutzmittels gemäß Anspruch 1 gelöst.

Die vorstehend aufgeführten Aufgaben der vorliegenden Erfindung werden ferner durch die Bereitstellung eines Verfahrens zur Herstellung eines wasserbasierenden Korrosionsschutzmittels gemäß Anspruch 13 gelöst.

Vorzugsweise kommen in der erfindungsgemäßen wHRK nur polare Lösungsmittel zur Anwendung, mehr bevorzugt nur Wasser als Lösungsmittel zur Anwendung. Mithin ist die erfindungsgemäße wHRK im Wesentlichen frei an unpolaren Lösungsmitteln, bspw. ist weniger als 0,1 Gew.-%, weniger als 0,5 Gew.-%, oder weniger als 0,01 Gew.-% eines unpolaren Lösungsmittels enthalten (bezogen auf 100 Gew.-% des wasserbasierenden Korrosionsschutzmittels). Im Wesentlichen frei an unpolaren Lösungsmitteln bedeutet mithin die mögliche Anwesenheit geringer Mengen an unpolaren Lösungsmitteln, aufgrund bspw. der Herstellung der Komponenten und deren Zersetzung.

Im Rahmen der vorliegenden Erfindung konnte das System der wHRK bezüglich seiner Eigenschaftsbildung charakterisiert und mittels statistischer Versuchsplanung (Design of Experiment - DoE) mathematisch modelliert werden. Damit ist es möglich geworden, rheologische Eigenschaften der wHRK gezielt über bestimmte Rohstoffe und eine Variation deren Gehalte im Bereich von ± 20 Gew.-% einzustellen. Eine zielgrößenbezogene Optimierung lässt sich so realisieren.

Die für die Rheologie bestimmenden Größen Viskosität und/oder Laufstrecke der wHRK sind von mehreren Bestandteilen der Zusammensetzung derartig abhängig, dass eine Untersuchung einer Einflussnahme von lediglich jeweils zwei oder drei Rezepturkomponenten auf die genannten Zielgrößen nicht zielführend ist. Hingegen wurde gefunden, dass eine Vielzahl von Bestandteilen eine Auswirkung auf die Viskosität und/oder Laufstrecke der wHRK zeigten.

Die entscheidenden Einflussgrößen wurden im Rahmen einer Untersuchung mittels Haupteffektdiagramm der Einflussgrößen auf die Zielgröße Viskosität bzw. Laufstrecke ermittelt (Gruseck, D. (2018): Untersuchung der Rheologie und Filmbildung eines wasserbasierenden Korrosionsschutzsystems am Beispiel einer Wachs-Dispersion, Dissertation, Universität Paderborn). Neben den Haupteffekten aus der Einzelbetrachtung der Rezepturkomponenten, treten Wechselwirkungsbeziehungen vermehrt in den Vordergrund. Dies wurde so erstmals durch den Einsatz statistischer Methoden möglich. Für die Viskosität ergeben sich daher folgende Beziehungen: Funktionalisiertes Wachs * Grenzflächenaktives Additiv; Grenzflächenaktives Additiv * pH-Stabilisator; Korrosionsschutzadditiv 1 * Korrosionsschutzadditiv 2; Korrosionsschutzadditiv 2 * pH-Stabilisator.

Aus den Komponentenpaarungen lassen sich folgende Wechselwirkungsbeziehungen ableiten, bei denen bei veränderter Konzentration der einen Komponente, die Konzentrationsänderung der anderen Komponenten einen gegenläufigen Effekt zur Folge hat: Funktionalisiertes Wachs * Grenzflächenaktives Additiv, Grenzflächenaktives Additiv * pH-Stabilisator; Korrosionsschutzadditiv 1 * Korrosionsschutzadditiv 2 und Korrosionsschutzadditiv 1 * pH-Stabilisator.

Daraus ergibt sich die Regressionsgleichung der Viskosität η (gemäß Gleichung 1):

$$\eta \ [mPa{*}s] = 47{,}811 \ [mPa{*}s] + 4{,}788 \ [mPa{*}s{*}g^{-1}] * (\text{Einwaage des funktionalisierten Wachses [g]}) + 6{,}040 \ [mPa{*}s{*}g^{-1}] * (\text{Einwaage des grenzflächenaktiven Additivs [g]}) + 3{,}895 \ [mPa{*}s{*}g^{-1}] * (\text{Einwaage des Korrosionsschutzadditivs 1 [g]}) + 1{,}389 \ [mPa{*}s{*}g^{-1}] * (\text{Einwaage des pH-Stabilisators [g]}) + 0{,}798 \ [mPa{*}s{*}g^{-1}] * (\text{Einwaage des Korrosionsschutzadditives 1 [g]}) + 1{,}629 \ [mPa{*}s{*}g^{-2}] * (\text{Einwaage des Wachses oder wachsähnlichen Stoffes [g]} * \text{Einwaage des grenzflächenaktiven Additivs [g]}) - 0{,}888 \ [mPa{*}s{*}g^{-2}] * (\text{Einwaage des grenzflächenaktiven Additivs [g]} * \text{Einwaage des pH-Stabilisators [g]}) + 1{,}018 \ [mPa{*}s{*}g^{-2}] * (\text{Einwaage des Korrosionsschutzadditivs 1 [g]} * \text{Einwaage des Korrosionsschutzadditives 2 [g]}).$$

(Gleichung 1)

Die Viskosität ist hierbei vη = 50 mPa*s mit einer möglichen Abweichung von ± 10 mPa*s. Vorzugsweise beträgt die Abweichung ± 9 mPa*s, ± 8 mPa*s, ± 7 mPa*s, ± 6 mPa*s, ±5 mPa*s, ± 4 mPa*s, ± 3 mPa*s, ± 2 mPa*s oder ± 1 mPa*s.

Die Gleichung (1) wird bei Raumtemperatur, vorzugsweise bei einer Temperatur von 23 °C, mit einem Rheometer bei konstanter Scherrate bestimmt. Als Messgerät wird vorzugsweise ein Rheometer MCR 302 (Anton Paar, Österreich) mit zugehörigem Zylinder-Messsystem nach den Herstellerangaben verwendet. Die Scherrate wird mit $\dot{\gamma}$ = 1.000 s$^{-1}$ konstant gehalten.

Die Wechselwirkungen für die Zielgröße Laufstrecke ergeben sich: Funktionalisiertes Wachs * Grenzflächenaktives Additiv; sowie Funktionalisiertes Wachs * Korrosionsschutzadditiv 1 als gegenläufige Beziehungen.

Daraus wird die Regressionsgleichung für die Laufstrecke gemäß Gleichung 2 wie folgt erhalten:

$$LS = 17,18 - 2,325 * (\text{Funktionalisiertes Wachs}) - 6,625 *$$

$$(\text{Grenzflächenaktives Additiv}) + 4,70 * (\text{Funktionalisiertes Wachs})^2 - 1,625 *$$

$(\text{Funktionalisiertes Wachs} * \text{Grenzflächenaktives Additiv})$ LS [cm] = 17,18 [cm] – 2,325 [cm*g$^{-1}$] * (Einwaage des funktionalisierten Wachses [g]) – 6,625 [cm*g$^{-1}$] * (Einwaage eines grenzflächenaktiven Additivs [g]) + 4,70 * [cm*g$^{-2}$] * (Einwaage des funktionalisierten Wachses [g])$^2$ - 1,625 [cm*g$^{-2}$] * (Einwaage des funktionalisierten Wachses [g] * Einwaage des grenzflächenaktiven Additivs [g]).          (Gleichung 2)

Die Laufstrecke beträgt hierbei LS = 25 cm mit einer möglichen Abweichung von ± 5 cm. Vorzugsweise beträgt die mögliche Abweichung ± 4 cm, ± 3 cm, ± 2 cm, ± 1 cm, ± 0,5 cm, ± 0,1 cm oder ± 0,01 cm.

Die Gleichung (2) wird bei Raumtemperatur, vorzugsweise bei einer Temperatur von 23 °C, und einer relativen Luftfeuchte von $\varphi$ = 50 % ± 5 % bestimmt. Zur Bestimmung der Laufstrecke kann bspw. ein Maßband verwendet oder eine Laser-Distanzmessung durchgeführt werden.

Als weitere beschreibende Größe der wHRK kann der Verlustfaktor tan $\delta$ hinzugezogen werden. Dieser bezeichnet in der Rheologie das Verhältnis zwischen Verlustmodul G '' (Imaginärteil) und Speichermodul G' (Realteil). Ein hoher Verlustfaktor zeigt damit ein Verhalten an, das sich gemäß tan $\delta$ = G''/ G', einer ideal-viskosen Flüssigkeit mit newtonschem Fließverhalten annähert. Ein niedriger Verlustfaktor zeigt hingegen die Annäherung an ein Verhalten eines ideal-elastischen Festkörpers. Der Verlustfaktor tan $\delta$ kann mithin ebenfalls hinzugezogen werden, um die ggf. vorliegende gelartige Beschaffung der wHRK, etc., zu beschreiben.

Für den Verlustfaktor tan $\delta$ gilt Gleichung 9:

tan $\delta$ [ ]= 0,5936 [ ] – 0,0215 [g$^{-1}$] * (Einwaage des funktionellen Wachses [g]) + 0,0353 [g$^{-1}$] * (Einwaage des grenzflächenaktiven Additivs [g]) – 0,303 [g$^{-1}$] * (Einwaage des Korrosionsschutzadditivs [g]) + 0,0426 [g$^{-1}$] * (Einwaage des pH-Stabilisators [g]) – 0,0962 [g$^{-2}$] * (Einwaage des funktionellen Wachses [g] * Einwaage des grenzflächenaktiven Additivs [g]) + 0,0436 * [g$^{-2}$] * (Einwaage des funktionellen Wachses [g] * Einwaage des pH-Stabilisators [g]) – 0,0529 [g$^{-2}$] * (Einwaage des grenzflächenaktiven Additivs [g])$^2$

          (Gleichung 9)

Der Verlustfaktor beträgt hierbei tan $\delta$ = 0,5 mit einer möglichen Abweichung von ± 0,2. Vorzugsweise beträgt die mögliche Abweichung ± 0,18, ± 0,16, ± 0,14, ± 0,12, ± 0,10, ± 0,08, ± 0,06, ± 0,04, ± 0,02 oder ± 0,01.

Die Gleichung (9) gilt für Raumtemperatur, vorzugsweise bei einer Temperatur von 23 °C. Als Messgerät wird vorzugsweise ein Rheometer MCR 302 (Anton Paar, Österreich) mit zugehörigem Zylinder-Messsystem nach den Herstellerangaben verwendet. Die Scherrate zur Vorscherung wird mit $\dot{\gamma}$ = 1.000 s$^{-1}$ konstant gehalten. Der tan $\delta$ wird mit einer Kreisfrequenz $\omega$ = 10 rad/s und einer Deformation von $\gamma$ = 5 % von mittels Oszillation bestimmt.

Basierend auf diesen Erkenntnissen ist es somit möglich durch Variation der grenzflächenaktiven Substanzen im Bereich von ± 20 Gew.-%, sowie eine gezielte Substitution der eigenschaftsbestimmenden Komponenten durch funktionell analoge Stoffe oder Zubereitungen, kundenspezifische oder applikationsoptimierte Materialien zu entwickeln und/oder einzustellen.

Aus den Ergebnissen der zielgrößenspezifischen Systemmodellierung können nun ohne weiteres mehrere optimierte und/oder angepasste Zusammensetzungen abgeleitet werden. Damit ist eine kundenspezifische Materialeinstellung gemäß den Applikationsanforderungen und den Bauteilgeometrien gegeben. Dadurch lässt sich eine optimale Beschichtung über Mengenanpassung und Materialreduktion erreichen, was einem nachhaltigen Grundsatzgedanken und Ressourcenschonung entsprechen. Unter Kenntnis der Einflussnahme durch die jeweiligen Rohstoffe ist es nun möglich auch weitere Rezepturen in Abhängigkeit der gewünschten Eigenschaften zu erstellen und so die Entwicklungsarbeit zu verbessern und zu erleichtern.

Der Begriff "wasserbasierendes Korrosionsschutzmittel" wie hierin verwendet betrifft ein Korrosionsschutzmittel dessen Bestandteile in einem wässrigen Medium dispergiert vorliegen. Der Gehalt an Wasser beträgt hierbei vorzugsweise 10,0 bis 60,0 Gew.-%, mehr bevorzugt 10,0 bis 50,0 Gew.-%, bspw. 15,0 bis 45,0 Gew.-%, 20,0 bis 40,0 Gew.-%, 25,0 bis 35,0 Gew.-%, 27,5 bis 34,0 Gew.-%, 30,0 bis 33,0 Gew.-%, oder 31,0 bis 32,0 Gew.-%, voll entsalzten Wassers (VEW), bezogen auf 100 Gew.-% des Korrosionsschutzmittels. Dadurch unterscheidet sich das wasserbasierende Korrosionsschutzmittel von einem lösungsmittelbasierenden Korrosionsschutzmittel, in dem ein unpolar organisches Lösungsmittel zur Verwendung gelangt, und von lösungsmittelfreien Korrosionsschutzmitteln.

Das voll entsalzte Wasser kann bspw. einfach destilliertes Wasser, mehrfach destilliertes Wasser, deionisiertes Wasser (bspw. mittels Ionenaustausch), oder demineralisiertes Wasser sein. Die Herstellung des voll entsalzten Wassers ist dem Fachmann geläufig. Die Leitfähigkeit des voll entsalzten Wasser kann bspw. 5 mS/m oder weniger betragen, bspw. 3 $\mu$S/m bis 4 mS/m, 50 $\mu$S/m bis 3 mS/m, 100 $\mu$S/m bis 2 mS/m, 200 $\mu$S/m bis 1 mS/m, 300 $\mu$S/m bis 900 $\mu$S/m, 400 $\mu$S/m bis 800 $\mu$S/m, 500 $\mu$S/m bis 700 $\mu$S/m, oder 600 $\mu$S/m bis 650 $\mu$S/m, betragen.

Die notwendige Erhöhung der Viskosität nach Applikation wird bei dem wasserbasierenden Korrosionsschutzmittel neben dem Verdunsten des Mediums, mithin des Wassers, durch die Ausbildung von, auf physikalischen Wechselwirkungen basierenden, Überstrukturen in Form von Gelen, erzielt. Das Verdunsten wird bspw. durch Temperaturerhöhung begünstig. Diese Temperaturerhöhung bewirkt eine Trocknung des wasserbasierenden Korrosionsschutzmittels. Nach Gelieren des Korrosionsschutzmittels bzw. Verdunsten des Mediums bildet sich auf der beschichteten Oberfläche ein vor Korrosion schützender Film aus.

Im weiteren Verlauf der Funktionsweise des wasserbasierenden Korrosionsschutzmittels ist eine gute Wärmestandfestigkeit notwendig, so dass bei Wiedererwärmung des Bauteils das verfilmte Korrosionsschutzmittel nicht erneut flüssig wird bzw. auslaufen kann und die Festigkeit des Korrosionsschutzmittels in einem Bereich von üblicherweise -20 °C bis +105 °C gegeben ist. Diese beruht bei dem wasserbasierenden Korrosionsschutzmittel nur zu einem geringen Maß, vorzugsweise nicht, auf einer chemischen Vernetzung der enthaltenden Komponenten erzielt, wie beispielsweise der oxidativen Vernetzung bzw. Trocknung von Alkydharz.

Das erfindungsgemäße wasserbasierende Korrosionsschutzmittel kann ein Hohlraumkonservierungsmittel, ein Mittel zur Unterbodenschutzbeschichtung, ein Mittel zur permanenten Lager- und Transportschutzbeschichtung, oder ein Mittel zur temporären Lager- und Transportschutzbeschichtung sein.

Das erfindungsgemäße wasserbasierende Korrosionsschutzmittel ist vorzugsweise für den Korrosionsschutz eines Bauteils, insbesondere Kraftfahrzeugteils, vorgesehen.

Vorzugsweise ist das erfindungsgemäße wasserbasierende Korrosionsschutzmittel kalt applizierbar und kann mithin bei einer Temperatur von 20°C bis 35°C, vorzugsweise bei Raumtemperatur und mithin einer Temperatur von 20°C bis 25°C, 21°C bis 24°C, oder 22°C bis 23°C, bspw. auf ein Bauteil, aufgetragen werden.

Vorzugsweise ist das erfindungsgemäße wasserbasierende Korrosionsschutzmittel reversibel gelierend und physikalisch trocknend. Der Begriff "reversibel gelierend" betrifft hierbei eine durch äußere Einflüsse, bspw. eine Temperaturerhöhung und/oder mechanische Belastung, stattfinde Viskositätserniedrigung und mithin eine zumindest teilweise auftretende Verflüssigung des wasserbasierenden Korrosionsschutzmittels. Der Begriff "physikalisch trocknend" betrifft das Verfilmen der wHRK durch Abgabe des darin enthaltenen Wassers, vorzugsweise im Wesentlichen ohne chemische Quervernetzung, mithin einer Ausbildung von kovalenten Bindungen, irgendwelcher in der wHRK enthaltenen Komponenten.

Die reversibel gelierende und/oder die physikalisch trocknende Beschaffenheit der wHRK wird vorzugsweise durch eines oder mehrere Parameter, wie der Viskosität $\eta$, der Laufstrecke LS und dem Verlustfaktor tan $\delta$, beschrieben. Mehr bevorzugt kommen zwei der vorstehend genannten Parameter, noch mehr bevorzugt alle drei Parameter, zur Anwendung.

Vorzugsweise ist das erfindungsgemäße wasserbasierende Korrosionsschutzmittel, auch bei dicken Schichten, rheologisch steuerbar sowie anwendungsbezogen einstellbar. Der Begriff "dicke Schicht" wie hierin verwendet betrifft Schichtdicken von 800 $\mu$m oder mehr, bspw. 1.000 $\mu$m bis 6.000 $\mu$m, 2.000 $\mu$m bis 4.000 $\mu$m, oder 3.000 $\mu$m bis 4.000 $\mu$m. Die Schichtdicke ergibt sich hierbei durch das gewählte Beschichtungsverfahren, vorzugsweise Auftragen mit einer Rakel, und wird nicht nachträglich durch Bestimmen der Schichtdicke mit einem Messverfahren ermittelt. Der Begriff "rheologisch steuerbar" wie hierin verwendet betrifft die Möglichkeit die Viskosität und/oder die Laufstrecke des wasserbasierenden Korrosionsschutzmittels "anwendungsbezogen", und mithin den Kundenwünschen und/oder technischen Gegebenheiten entsprechend, einzustellen. Diese Einstellung der Viskosität und/oder die Laufstrecke, vorzugsweise der Viskosität und der Laufstrecke, des wasserbasierenden Korrosionsschutzmittels erfolgt hierbei insbesondere im Rahmen der Gleichung 1 für die Viskosität und Gleichung 2 für die Laufstrecke.

Das erfindungsgemäße wasserbasierende Korrosionsschutzmittel weist 0,1 bis 10,0 Gew.-% eines grenzflächenaktiven Additivs, 0,0 bis 5,0 Gew.-% eines funktionalisierten Wachses, 1,0 bis 40,0 % Gew.-% eines organischen Bindemittels, 0,1 bis 15,0 Gew.-% eines Korrosionsschutzadditivs, 10,0 bis 60,0 Gew.-% voll entsalzten Wassers (VEW), 1,0 bis 40,0 Gew.-% eines Öls, 1,0 bis 20,0 Gew.-% eines Wachses oder wachsähnlichen Stoffes, 0,0 bis 5,0 Gew.-% eines pH-Stabilisators, und 0,0 bis 2,0 Gew.-% eines Biozids, bezogen auf 100 Gew.-% des Korrosionsschutzmittels, auf.

Ein grenzflächenaktives Additiv betrifft hierbei 1 grenzflächenaktives Additiv oder mehr, bspw. 2 bis 5, oder 3 bis 4 grenzflächenaktive Additive. Ein funktionalisiertes Wachs betrifft hierbei 1 funktionalisiertes Wachs oder mehr, bspw. 2 bis 5, oder 3 bis 4 funktionalisierte Wachse. Ein organisches Bindemittel betrifft hierbei 1 organisches Bindemittel oder mehr, bspw. 2 bis 5, oder 3 bis 4 organische Bindemittel. Ein Korrosionsschutzadditiv betrifft hierbei 1 Korrosionsschutzadditiv oder mehr, bspw. 2 bis 5, oder 3 bis 4 Korrosionsschutzadditive. Hierbei kann es sich gleichermaßen um ein Korrosionsschutzadditiv 1 und/oder ein Korrosionsschutzadditiv 2 handeln. Ein Öl betrifft hierbei 1 Öl oder mehr, bspw. 2 bis 5, oder 3 bis 4 Öle. Ein Wachs oder wachsähnlicher Stoff betrifft hierbei 1 Wachs oder wachsähnlichen Stoff oder mehr, bspw. 2 bis 5, oder 3 bis 4 Wachse oder wachsähnliche Stoffe. Ein Neutralisationsmittel betrifft hierbei 1 Neutralisationsmittel oder mehr, bspw. 2 bis 5, oder 3 bis 4 Neutralisationsmittel. Ein pH-Stabilisator betrifft hierbei 1 pH-Stabilisator oder mehr, bspw. 2 bis 5, oder 3 bis 4 pH-Stabilisatoren. Ein Biozid betrifft hierbei 1 Biozid oder mehr, bspw. 2 bis 5, oder 3 bis 4 Biozide.

Bei dem Korrosionsschutzadditiv 1 und dem Korrosionsschutzadditiv 2 kann es sich um identische Verbindungen handeln. In diesem Fall kann ebenfalls, anstelle der Bezeichnung "Korrosionsschutzadditiv 1" bzw. "Korrosionsschutzadditiv 2", auch der Begriff "Korrosionsschutzadditiv" verwendet werden. Vorzugsweise sind das Korrosionsschutzadditiv 1 und das Korrosionsschutzadditiv 2 verschieden.

Sofern das erfindungsgemäße wasserbasierende Korrosionsschutzadditiv zwei verschiedene Korrosionsschutzadditive aufweist, wird vorzugsweise das in höherer Konzentration vorliegende Korrosionsschutzadditiv als Korrosionsschutzadditiv 1 und das in niedriger Konzentration vorliegende Korrosionsschutzadditiv als Korrosionsschutzadditiv 2 angesehen. Sollte das erfindungsgemäße wasserbasierende Korrosionsschutzadditiv drei oder mehr Korrosionsschutzadditive aufweisen, wird vorzugsweise die Konzentration des dritten Korrosionsschutzadditivs und ggf. jedes weiteren Korrosionsschutzadditivs zu der Konzentration des Korrosionsschutzadditivs 2 addiert. Eine Kombination bestehend aus Aminderivaten ("Korrosionsschutzadditiv 1") und Sulfonaten ("Korrosionsschutzadditiv 2") ist besonders bevorzugt.

Sofern eine der verwendeten Komponenten des erfindungsgemäßen wasserbasierenden Korrosionsschutzmittels zwei oder mehr Funktionen, ausgewählt unter einem grenzflächenaktiven Additiv, einem funktionalisierten Wachs, einem organischen Bindemittel, einem Korrosionsschutzadditiv, einem Öl, einem Wachs oder wachsähnlichen Stoff, einem Neutralisationsmittel, einem pH-Stabilisator, und einem Biozid aufweist, bzw. die Komponente aufgrund ihrer Eigenschaften als entsprechende Verbindungen angesehen werden kann, erfolgt die Zuordnung vorzugsweise gemäß der vorstehend genannten Funktionsreihenfolge. Mithin wird die Komponente vorzugsweise der erstgenannten Funktion (aus der vorstehend genannten Reihenfolge) zugeordnet. Bspw. wird eine Komponente, die sowohl als grenzflächenaktives Korrosionsschutzmittel als auch als organisches Bindemittel angesehen werden kann, im Rahmen der vorliegenden Erfindung als grenzflächenaktives Additiv angesehen. Gleichermaßen ist bspw. eine Substanz, die sowohl als Öl als auch als Wachs oder wachsähnlichen Stoff angesehen werden kann, im Rahmen der vorliegenden Erfindung als Öl angesehen. Dies trifft, wie vorstehend erwähnt, auch dann zu wenn die Komponente mehr als zwei der genannten Funktionen, bspw. 3, 4, 5 oder mehr, aufweisen sollte.

Der Begriff "grenzflächenaktives Additiv" oder "Emulgator" wie hierin verwendet betrifft einen Hilfsstoff, der dazu dient, zwei nicht miteinander mischbare Flüssigkeiten, wie zum Beispiel Öl und Wasser, zu einer Emulsion zu vermischen und zu stabilisieren.

Geeignete Emulgatoren weisen die allgemeine Formel $R-(O-CH_2-CH_2-)_x-OH$ auf, wobei R ein Alkylrest, Arylrest, Carbonsäurerest oder ein Derviat eines Carbonsäurerestes ist, und $3 \leq x \leq 50$ mit x e N. Vorzugsweise ist $5 \leq x \leq 45$, $10 \leq x \leq 40$, $15 \leq x \leq 35$, oder $20 \leq x \leq 30$.

Gemäß noch einer weiteren bevorzugten Ausführungsform der vorliegenden Erfindung ist das grenzflächenaktive Additiv ausgewählt aus der Gruppe bestehend aus einem nichtionischen Emulgator, einem Alkylcarboxylat, einem Alkylbenzolsulfonat, oder einem Alkylethersulfat, wobei der nichtionische Emulgator die allgemeine Form $R-(O-CH2-CH2-)_x-OH$ aufweist, wobei R ein Alkylrest, Arylrest, Carbonsäurerest oder ein Derviat eines Carbonsäurerestes ist, und $3 \leq x \leq 50$ mit $x \in \mathbb{N}$.

Der Begriff "Wachs" wie hierin verwendet betrifft eine organische Verbindung, die bei $\geq 40\,°C$ schmilzt und anschließend eine Flüssigkeit mit niedriger Viskosität bildet. Wachse sind nahezu unlöslich in polaren Lösungsmitteln, wie bspw. Wasser, aber löslich in organischen, unpolaren Lösungsmitteln.

Polare bzw. unpolare Lösungsmittel werden im Rahmen der vorliegenden Erfindung über die $E_T(30)$- bzw. $E_T^N$-Skala definiert. Entsprechende Werte können der Literatur entnommen werden. Vorzugsweise weisen polare Lösungsmittel einen $E_T(30)$-Wert von $\geq 200$ kJ/mol auf, unpolare Lösungsmittel weisen einen $E_T(30)$-Wert von $< 200$ kJ/mol auf. $E_T(30)$-Werte verschiedener Lösungsmittel können beispielsweise aus der Literatur, oder der Webseite https://www.uni-marburg.de/fb15/ag-reichardt/et_home entnommen werden. Ein beispielhaftes polares Lösungsmittel ist ein Lösungsmittel mit einer Polarität von 1-Octanol oder polarer, wie bspw. Butanol oder Propanol.

Die im Rahmen der vorliegenden Erfindung verwendeten Wachse sind synthetisch und/oder natürlichen Ursprungs, wobei vorzugsweise mindestens ein wachsartiger Körperstoff paraffinischer Natur ist. Geeignete Wachse können L. Ivanovszky(1954): Wachsenzyklopädie Band 1, Augsburg: Verlag für chemische Industrie H. Ziolkowsky K.G entnommen werden.

Die Wachse können Mikrowachse bzw. mikrokristalline Wachse, bspw. feinkristallines Paraffin, sein. Im Vergleich zu paraffinischen Wachsen, welche hauptsächlich unverzweigte Alkane enthalten, weist ein Mikrowachs einen höheren Anteil isoparaffinischer Kohlenwasserstoffe auf. Mikrowachse weisen vorzugsweise Erstarrungspunkte zwischen 70 °C und 80 °C auf und enthalten bis zu 75 Kohlenstoffatome.

Ein "funktionalisiertes Wachs" oder "funktionelles Wachs" umfasst Wachse, bspw. Mikrowachse, die mit chemisch funktionellen Gruppen, vorzugsweise eines oder mehrere einer Carboxylgruppe, Carbonylgruppe, Hydroxylgruppe; und Ester- bzw. pseudo-Ester-Gruppe, Thiocarboxylgruppe, Thiocarbonylgruppe, Thiolgruppe; und Thioester- bzw. pseudo-Thioester-Gruppe versehen sind. Eine pseudo-Ester-Gruppe oder pseudo-Thioester-Gruppe stellt hierbei eine isomere Form der Ester-Gruppe bzw. Thioester-Gruppe dar. Die Zahl der chemisch funktionellen Gruppen ist hierbei nicht begrenzt.

Die Carboxylgruppe und/oder Thiocarboxylgruppe-funktionalisierten Wachse werden vorzugsweise vor oder bei der Herstellung neutralisiert. Hierfür können einwertige und/oder multivalente Kationen, insbesondere Alkali- und/oder Erdalkaliionen, in einer Hydroxyverbindung verwendet werden. Die daraus resultierenden Wachsseifen wirken dann als grenzflächenaktive Substanzen und/oder Korrosionsinhibitoren. Weitere Information hierzu kann Costello M.T. (2008): Corrosion Inhibitors and Rust Preventatives in Leslie R. Rudnick; Lubricant Additives, Chemistry and Applications 2nd Revised edition, Boca Raton, FL: CRC Press Taylor and Francis Group, S. 420-431 entnommen werden.

Als "organische Bindemittel" im Sinne dieser Erfindung werden Harze verstanden, wie sie in Zorll, U. (1998): Römpp Lexikon-Lacke und Druckfarben, Stuttgart: Thieme bzw. Barendrecht, W., Collin, G., Dunlop, A. P., McKillip, W. J., Wöllner, J., Stoye, D.,Allwinn, R., Griebsch E. (1976): Harze, synthetische, in: Bartholomé E., Biekert, E., Hellmann, H, Ley, H., Weigert, W.M. Ullmanns Enzyklopädie der technischen Chemie 4. Aufl. Bd. 12 Fungizide bis Holzwerkstoffe, Weinheim: Verlag Chemie, S. 539-555 aufgeführt werden.

Bevorzugte organische Bindemittel sind Kohlenwasserstoffharze (Zorll U. (1998): Römpp Lexikon-Lacke und Druckfarben, Stuttgart: Thieme). Kohlenwasserstoffharze weisen mehr bevorzugt eine mittlere Molmasse im Bereich von 300 - 2.000 g/mol, bspw. 500 - 1.500 g/mol, oder 750 - 1.000 g/mol, und/oder eine Dichte zwischen 0,9 g/cm$^3$ - 1,2 g/cm$^3$ auf. Die Kohlenwasserstoffharze sind im Regelfall in unpolaren Lösungsmitteln, wie Ethern, Estern, Ketonen und chlorierten und halogenfreien Kohlenwasserstoffen gut löslich.

Die Kohlenwasserstoffharze umfassen Harze aus Erdöl bzw. Petroleumharze, Harze aus Kohleteer und Terpenharze. Petroleumharze sind bevorzugt. Die Herstellung dieser Harze ist dem Fachmann bekannt.

Über entsprechende Modifikation können in die häufig unpolaren und wenig funktionellen Kohlenwasserstoffharze gezielte Eigenschaften, insbesondere polare funktionelle Gruppen, eingebaut werden, bspw. über die Copolymerisation ungesättigter Kohlenwasserstoffharze mit Phenol. Derartige modifizierte Kohlenwasserstoffharze sind aufgrund besserer Löslichkeit in Wasser besonders bevorzugt.

Weitere bevorzugte organische Bindemittel sind Styrol-Acrylat Polymerdispersionen. Diese sind bspw. in Müller, B., Poth,U. (2009): Lackformulierung & Lackrezeptur, Hannover: Vincentz Network GmbH & Co; Goldschmidt A, H.J. Streitberger (2014): BASF Handbuch der Lackiertechnik, 2. Auflage, Hannover: Vincentz Network GmbH & Co, Thieke, B. (1997): Makromolekulare Chemie-Eine Einführung, 1. Auflage, Weinheim: VCH Verlagsgesellschaft mbH; Poth, U.; Schwalm; R., Schwartz, M. (2011):Acrylatharze, Hannover: Vincentz Network und Diestler, D. Eidam, N., Kirchner, W., Kuropka, R., Lanman, A., Lutz, H., Müller, G., Petereit, H. U., Prantl, B, Schmidt-Thümmes, J., Schwarzenbach, E., Schwenzfeier, H.-P., Sülfke, T., Urban, D., Wiese, H., Wistuba, E, (1999) : in Diestler D, Wässrige Ploymerdispersionen, Weinheim: Willey-VCH Verlag GmbH, S. 1-30; Brock, T. Groteklaes, M. Mischke, P (1998)- Lehrbuch der Lacktechnologie, Hannover: Curt R. Vincentz Verlag aufgeführt.

Diese Copolymerisate können bspw. via Emulsionspolymersiation aus den Monomeren von Acrylsäureestern und Styrol in wässriger Lösung über radikalische Polymerisation erzeugt werden. Die Emulsionspolymersiation ist dem Fachmann geläufig und kann bspw. zur Erzeugung von Monodispersionen verwendet werden. Diese weisen dabei für gewöhnlich eine mittlere Teilchengröße $D_{50}$ zwischen 0,05 und 0,8 μm auf, die mittels herkömmlicher Laserdiffraktometrie, vorzugsweise nach ISO 13320:2009, bestimmt werden kann.

Speziell für lufttrocknende und bei Raumtemperatur vernetzende Systeme werden vorzugsweise besonders leicht flüchtigen Typen wie Ammoniak, als auch Vertreter der primären oder sekundären Amine eingesetzt, um eine Neutralisation des Bindemittels, und die Einstellung eines gewünschten pH-Werts von bspw. 6 bis 9, zu ermöglichen.

Heterogene Dispersionen, bei denen die Partikel zwei Polymerphasen in sich vereinen, zeichnen sich im Allgemeinen durch eine hohe Blockfestigkeit aus, und sind als organische Bindemittel bevorzugt. Diese Dispersionen bilden vorzugsweise nur ideale sphärische Polymerpartikel aus und können sich durch eine Vielzahl unterschiedlich strukturierter Latexteilchen auszeichnen.

Solche Kern-Schalen-Systeme bzw. Kern-Schalen-Kolloide stellen besonders bevorzugte organische Bindemittel dar. Für deren Herstellung wird auf ein vergleichsweise hartes Polymerpartikel, ein zweites, vergleichsweise weicheres Polymer aufpolymerisiert bzw. aufgepfropft. Die Partikelmorphologie hängt bei der Stufenpolymerisation für gewöhnlich von thermodynamischen, sowie kinetischen Faktoren, wie auch der Zusammensetzung bzw. vom Mengenverhältnis der beiden phasenbildenden Polymere ab.

Die Herstellung der Kern-Schalen-Systeme erfolgt dabei entsprechend der Emulsionspolymerisation über zwei Stufen mit getrennter Monomerzugabe. Eine Besonderheit dieses Typs stellen die sogenannten inversen Kern-Schalen-Partikel dar. Dabei kommt es zur Umkehrung der Positionierung der Phasen, so dass sich das in Stufe 1 gebildete Polymer am Ende der Herstellung als Schalenmaterial identifizieren lässt.

Im Rahmen der vorliegenden Erfindung ist daher ein, vorzugsweise bei Raumtemperatur, verfilmendes Bindemittel vom Typ eines inversen Kern-Schalen-Partikels verwendet.

Eine Stabilisierung erfolgt mutmaßlich über die Positionierung polymerer Strukturen auf der Partikeloberfläche, welche in Form einer Pfropfpolymerisation in der Emulsion erfolgt. Durch diesen Vorgang wird die "Schalenstruktur" entsprechend polar ausgelegt, so dass diese Wasser-Moleküle einlagern kann, und dieses dann gemäß eines "Weichmachers" fungiert. Dieses Gel kann an Luft, ohne Freisetzung organischer Lösemittel, trocknen und die Polymerkügelchen können über Grenzflächeninterdiffusion verfilmen. Diese Dispersion ist selbstvernetzend.

Der Begriff "Korrosionsschutzadditiv" oder "Korrosionsinhibitor" wie hierin verwendet betrifft vorzugsweise Inhibitoren, z.B. in Form von organischen Molekülen, die an eine Oberfläche eines Substrats adsorbieren und so mögliche Rektionen mit der Umgebung blockieren. Sie unterbinden damit vor allem im Bereich metallischer Substrate die, durch Einwirkung von Luftsauerstoff initiierte, Korrosion. Weiteres hierzu kann Costello M.T. (2008): Corrosion Inhibitors and Rust Preventatives in Leslie R. Rudnick; Lubricant Additives, Chemistry and Applications 2nd Revised edition, Boca Raton, FL: CRC Press Taylor and Francis Group, S. 420 - 431 bzw. Bieleman J. (1998): Lackadditive, Weinheim: WILEY-VCH Verlag GmbH entnommen werden.

Im Rahmen der vorliegenden Erfindung kommen vorzugsweise chemische Korrosionsinhibitoren, insbesondere Chemisorbenzien, Passivatoren und Deckschichtbildner, ggf. auch physikalische Korrosionsinhibitoren zum Einsatz.

Der Korrosionsinhibitor sollte frei beweglich sein, was einer "Kopplung" an das Bindemittel widerspricht, bzw. sollte nicht während der Vernetzungsreaktion in die Matrix eingebunden werden. Die Molmasse des Korrosionsinhibitors beträgt hierzu vorzugsweise 600 g/Mol oder weniger, bspw. 500 g/Mol oder weniger, 400 g/Mol oder weniger, 300 g/Mol oder weniger, oder 150 bis 250 g/Mol.

In Beschichtungen werden zum Schutz gegen atmosphärische Korrosion (schwach saure bis schwach alkalische Medien in Gegenwart von Sauerstoff) Inhibitoren eingesetzt. Diese Inhibitoren können basische Verbindungen wie organische Basen, Amine oder Aminderivate, organische Säuren oder Salze davon, insbesondere Carbonsäuren oder Carbonsäuresalze, Phenol-Carbonsäuren, wie beispielweise Tannin, Nitrocarbonsäuren, basische Weichmacher, organische Chromverbindungen und oxidierend wirkende organische Verbindungen sein. Eine weitere Möglichkeit stellt die Verwendung von organischen Chromverbindungen, bspw. organische Chromate, Phosphate, Phosphite, Phosphonsäurederivate, und Arsensäurederivate dar, welche eine gute Inhibitorwirkung durch die anorganischen Anteile aufweisen und über die organische Komponente eine gute Einbindung in das Bindemittel gewährleisten.

Typische Korrosionsschutzadditive in der Lacktechnologie sind die Sulfonate. Die zugrundliegenden Sulfonsäuren können bspw. aus Kohlenwasserstoffen und $SO_3$ dargestellt werden.

Weiterhin können Sulfonate, insbesondere Petrolsulfonate, für den Korrosionsschutz eingesetzt werden. Man unterscheidet im Allgemeinen zwischen natürlichen und synthetischen Sulfonaten. Über die Kettenlänge wird die Öl- bzw. Wasserlöslichkeit des späteren Produktes eingestellt. Die Sulfonate liegen bspw. als Na-, Ca-, Mg- oder Ba-Sulfonate vor. Sulfonate mit höheren Molmassen sind bevorzugt. Diese Sulfonate weisen Alkylketten von C16 oder mehr, bspw. C20 bis C50, C25 bis C45, oder C30 bis C40 auf.

Diese basischen Detergentien sind auch in einer "über oder superbasischen" Form verfügbar und können als Korrosionsschutzadditiv verwendet werden (siehe hierzu überbasische Sulfonatzubereitungen nach Bieleman J. (1998): Lackadditive, Weinheim: WILEY-VCH Verlag GmbH). Sie wirken sich positiv auf die unkomplizierte Einarbeitung dieser Rohstoffgruppe in Lacke aus, sowie stellen eine Möglichkeit zur gezielten Einstellung des Ablaufverhaltens dar.

Neben den Eigenschaften der Stabilisierung von Dispersionen durch eine verdickende Wirkung, verfügen die überbasischen Formulierungen gemäß Costello M.T. (2008): Corrosion Inhibitors and Rust Preventatives in Leslie R. Rudnick; Lubricant Additives, Chemistry and Applications 2nd Revised edition, Boca Raton, FL: CRC Press Taylor and Francis Group, S. 420 - 431, über einen hervorragenden Korrosionsschutz. Sie werden damit auch zur Gruppe der physikalischen Korrosionsinhibitoren gezählt.

Die Petrolsulfonate sind nach Gerhard C. (19793): Petrolsulfonate, in: Bartholomé E., Biekert E., Hellmann H., Ley H., Weigert W.M. Ullmanns Enzyklopädie der technischen Chemie 4. Aufl. Bd. 18 Petrolsulfonate bis Plutonium, Weinheim: Verlag Chemie, S. 1 - 2, Produkte der Erdölraffination.

Die für die hier beschriebene Erfindung besonders bevorzugten Korrosionsinhibitoren entstammen den Gruppen der Carbonsäuren und deren Derivate, vorwiegend die der Phenylsulfonsäuren, sowie der Amine, Aminderivaten und/oder deren Reaktionsprodukten.

Ein "Öl" wie hierin verwendet ist gemäß Zorll, U. (1998): Römpp Lexikon-Lacke und Druckfarben, Georg Thieme Verlag Stuttgart, eine Sammelbezeichnung in Bezug auf organische Verbindungen ähnlicher physikalischer Eigenschaften. Diese sind in Wasser unlöslich und verfügen über einen geringen Dampfdruck, was als die wesentlichen Charakteristiken angesehen werden können. Öle sind grundsätzlich in drei Gruppen zu unterteilen: a) Mineralöle auf Erdölbasis, vollsynthetische Öle, b) Öle tierischen oder pflanzlichen Ursprungs, und c) ätherische Öle, also Öle und Riechstoffe pflanzlichen Ursprungs mit entsprechender Flüchtigkeit.

Ein Öl unterscheidet sich somit von einem "Wachs", das sich gemäß L. Ivanovszky(1954): Wachsenzyklopädie Band 1, Augsburg: Verlag für chemische Industrie H. Ziolkowsky K.G bzw. Ullmann, G. Schmidt, H. Brotz, W. Michalczyk; G. Payer, W. Dietsche , W. Hohner, G. Wildgruber, J. 1983: Wachse, in: Bartholomé E., Biekert, E., Hellmann, H, Ley, H., Weigert, W.M. Ullmanns Enzyklopädie der technischen Chemie 4. Aufl. Bd. 24 Wachse bis Zündhölzer, Weinheim: Verlag Chemie, S. 1 - 49 durch die gleichzeitige Erfüllung folgender Charakteristika auszeichnet: bei 20 °C knetbar, fest bis brüchig hart; grob- bis feinkristallin, durchscheinend bis opak, jedoch nicht glasartig; über 40 °C ohne Zersetzung schmelzend; schon wenig oberhalb des Schmelzpunktes verhältnismäßig niederviskos; stark temperaturabhängig in Konsistenz und Löslichkeit; unter leichtem Druck polierbar.

Ein "Neutralisationsmittel" wie hierin verwendet betrifft Mittel zur Einstellung eines bestimmten pH-Wertes und/oder pH-Bereichs.

Bevorzugte Neutralisationsmittel sind Amine. Das Amin kann ein primäres, sekundäres oder tertiäres Amin, vorzugsweise sekundäres oder tertiäres Amin, mehr bevorzugt ein tertiäres Amin, sein. Beispielhafte und bevorzugte Amine werden nachstehend im Hinblick auf den pH-Stabilisator aufgeführt.

Ein "pH-Stabilisator" wie hierin verwendet, wird zur Stabilisierung des pH-Werts auf einen Zielwert, bspw. ungefähr pH 7,0, und/oder Zielbereich, insbesondere auf einen pH von 7,0 bis 10,5, bspw. einen pH von 8,0 bis 10,0, 8,5 bis 9,5, oder 8,75 bis 9,25, verwendet. Der pH-Stabilisator kann insbesondere eine Pufferwirkung für einen pH-Bereich bereitstellen.

Als pH-Stabilisator wird vorzugsweise ein Amin eingesetzt.

Amine eignen sich ideal als Neutralisationsmittel von carboxylhaltigen Komponenten in einem wasserbasierenden Korrosionsschutzmittel. Zusätzlich tragen Amine ebenfalls zur Stabilisierung, insbesondere wässriger Systeme bei. Dies erfolgt durch die Ausbildung ionogener Strukturen und dem damit verbundenen Effekt der Ladungsbildung. Dadurch kommt es zwischen den z.B. Polymertröpfchen einer Dispersion zur elektrostatischen Abstoßung, was einer Koagulation entgegenwirkt und der Stabilisierung des Systems zugutekommt. Unterstützt wird dies durch damit verbundene Hydratisierung der Partikel in wässrigen Medien. Siehe hierzu Müller B., Poth U. (2009): Lackformulierung & Lackrezeptur, Hannover: Vincentz Network GmbH & Co, bzw. Goldschmidt A., H.J. Streitberger (2014): BASF Handbuch der Lackiertechnik, 2. Auflage, Hannover: Vincentz Network GmbH & Co.

Das Amin kann ein primäres, sekundäres oder tertiäres Amin, vorzugsweise sekundäres oder tertiäres Amin, mehr bevorzugt tertiäres Amin, sein.

Das Amin weist verschiedene organische Reste auf, bspw. einen subsituierten oder unsubstituierten Aryl-Rest und/oder subsituierten oder unsubstituierten Alkyl-Rest. Die subsituierten oder unsubstituierten Reste können hochmolekular mit bspw. einem Molekulargewicht von 150 g/mol oder mehr, bspw. 175 g/mol bis 800 g/mol, 200 g/mol bis 500 g/mol, oder 300 g/mol bis 400 g/mol, oder niedermolekular mit bspw. einem Molekulargewicht von weniger als 150 g/mol, bspw. 140 g/mol oder weniger, 130 g/mol oder weniger, 120 g/mol oder weniger, 110 g/mol oder weniger, 100 g/mol oder weniger, 90 g/mol oder weniger, 80 g/mol oder weniger, oder 70 g/mol oder weniger, sein. Beispielhafte Substituenten umfassen eine Hydroxylguppe oder Aminogruppe. Thiolgruppen und/oder Halogensubstituenten sind vorzugsweise nicht umfasst.

Im Rahmen der vorliegenden Erfindung sind insbesondere niedermolekulare, sekundäre oder tertiäre Amine bevorzugt, da sie über eine gute Wasserlöslichkeit verfügen. Darüberhinaus kann deren Abdunsten während der Filmbildung schnell und vollständig bzw. beinahe vollständig erreicht werden. Dadurch zerstört sich das, während der Herstellung in situ gebildete, Amphiphil. Die vorher neutralisierten Gruppen werden wieder frei, die ohne eine Amin-Stabilisierung zur Koagulation neigen würden. Diese können nun gezielt über die Filmbildung koagulieren und erhöhen somit zusätzlich die Hydrophobierung der Beschichtung und verbessern die Wasserbeständigkeit.

Gerade für lufttrocknende und auch bei Raumtemperatur verfilmende Formulierungen ist es von Vorteil besonders leicht flüchtige Vertreter dieser Stoffklasse wie beispielsweise Ammoniak oder Dimethylamin (DMA) einzusetzen.

Als weitere geeignete pH-Stabilisatoren sind Diethylamin, Diethylethanolamin und 2-Methyl-2-Aminopropanol zu nennen, wobei diese aufgrund ihrer hohen Siedepunkte vorwiegend in thermisch härtenden Systemen zum Einsatz kommen. Insbesondere 2-Methyl-2-Aminopropanol ist aufgrund des vergleichsweise milden Eigengeruchs bevorzugt.

"Biozide" sind auf die jeweilige Problematik abgestimmte Kombinationen von Wirkkomponenten zur Topfkonservierung. Umweltrelevante Hinweise und Informationen über deren Gebrauch sind der VERORDNUNG (EU) Nr. 528/2012: Bereitstellung auf dem Markt und die Verwendung von Biozidprodukten, DES EUROPÄISCHEN PARLAMENTS UND DES RATES;22. Mai 2012 und Hensel T. (2013): Biozide, Jahrestreffen BI, BG ETEM, 02.07.2013, die lacktechnologische Relevanz Goldschmidt A, H.J. Streitberger (2014): BASF Handbuch der Lackiertechnik, 2. Auflage, Hannover: Vincentz Network GmbH & Co; Brock, T. Groteklaes, M. Mischke, P (1998)- Lehrbuch der Lacktechnologie, Hannover: Curt R. Vincentz Verlag, zu entnehmen.

Gerade wasserbasierende Stoffe und mithin auch das erfindungsgemäße wasserbasierende Korrosionsschutzmittel sind für einen Befall von Mikroorganismen, bspw. Algen, Pilzen (Hefen) und Bakterien, potenziell anfällig. Um eine solche Kontamination zu vermeiden, ist neben einer entsprechend konzipierten Produktion mit entsprechenden Reinigungs- und Desinfektionszyklen, auch eine Gewährleistung des Systemschutzes über den Transport und die Lagerhaltung sicher zu stellen. Gerade in Lagergebinden kann eine mikrobielle Kontamination zu Bewuchs führen. Dies geht je nach Mikrobenart meist auch mit einer farblichen Veränderung der Oberfläche des Produktes einher. Des Weiteren kann es durch Abbau- und Stoffwechselprodukte der Mikroben zu irreversiblen Systemveränderungen wie pH-Wert Veränderungen, Beeinträchtigung des rheologischen Verhaltens, Koagulation, Brechen der Dispersionen, Gasentwicklung oder Fäulnis kommen.

Da nahezu alle Biozide eine gewisse Lücke in Bezug auf ihre Wirksamkeit gegenüber bestimmten Organismen aufweisen, werden üblicherweise mehrere Wirkstoffe eingesetzt. Man kann dabei auftretende synergistische Effekte durch eine gezielte Kombination von Verbindungen aus den jeweiligen Stoffklassen nutzen.

Die Auswahl des Biozids richtet sich gemäß den Anforderungen an das Fertigprodukt und den Wirkmechanismen der mikrobiellen Aktivität der Stoffe.

Vorzugsweise werden Benzalkoniumchlorid, Benzoesäure, Glutardialdehyd, ein Formaldehyd-Abspalter und ein Isothiazolinon allein oder in Kombination eingesetzt.

Beispielhafte und bevorzugte Formaldehyd-Abspalter umfassen Benzylhemiformal, 1,6-Dihydroxy-2,5-dioxahexan, Methylolharnstoff, 7-Ethylbicyclooxazolidin, Urotropin, Paraformaldehyd, Tris(hydroxymethyl)-nitromethan.

Isothiazolone sind Verbindungen aus dem Bereich der Heterozyklen und werden für gewöhnlich über ihre Substituenten charakterisiert. Beispielsweise und vorzugsweise kommen Isothiazolinon, Methylisothiazolinon, Chlormethylisothiazolinon oder Benzisothiazolinon allein oder in Kombination zur Verwendung. Isothiazolone weisen polare Zentren innerhalb des Moleküls auf, wodurch diese Verbindungsklasse für einen Einsatz in wässrigen Systemen in Bezug auf eine homogene Verteilung und Stabilisierung durch Hydratisierung im gesamten System von Vorteil ist.

Besonders bevorzugt wird mindestens ein Formaldehyd-Abspalter mit mindestens einem Isothiazolon eingesetzt, um einen umfassenden Schutz gegenüber einer Kontamination durch einen Mikroorganismus bereitzustellen.

Silber, insbesondere in Form von Silberionen, bspw. Silbersalze, kann ebenfalls als Biozid eingesetzt werden Nach Falbe J., Regnitz M. (1992): Römpp Chemielexikon, 9.Auflage, Bd. 2, PI-S, Stuttgart: Georg Thieme Verlag, wirken Silberionen stark antiseptisch. Diese üben eine blockierende Wirkung auf die Thiol-Enzyme bei Mikroorganismen aus. Silberionen wirken daneben stark fungizid und bakterizid. Daher finden Silber haltige Zubereitungen immer häufiger Anwendung im medizinischen bzw. pharmazeutischen Bereich zur Wundversorgung in Form dünner Folien oder entsprechenden Darreichungsformen zur inneren und äußeren Anwendung als Antiseptika und Antimykotika. Selbst in der Trinkwasseraufbereitung werden Silberionen zur Entkeimung eingesetzt.

Sofern nicht explizit anderweitig erwähnt, sind die Bedingungen, bei denen eine Zusammensetzung oder Komponente davon verwendet, untersucht oder eingesetzt wird, Raumtemperatur, mithin eine Temperatur von 20°C bis 25°C, bspw. 21°C bis 24°C, oder 22°C bis 23°C, und/oder Normaldruck, mithin ein Druck von 0,85 bar bis 1,1 bar, bspw. 0,9 bar bis 1,05 bar, oder 0,95 bis 1,0 bar.

Gemäß einer bevorzugten Ausführungsform der vorliegenden Erfindung weist das Korrosionsschutzmittel eine gelbildende Komponente auf und das Korrosionsschutzmittel verfestigt nach Applikation eigenständig.

Eigenständige Verfestigung bedeutet hierbei, dass die Verfestigung und mithin die Viskositätserhöhung ohne zusätzlichen Energieeintrag und ohne jegliche weiteren stofflichen Veränderungen vor dem eigentlichen Trocknungsprozess durch Gelbildung auftritt.

Gemäß einer weiteren bevorzugten Ausführungsform der vorliegenden Erfindung, weist das wasserbasierende Korrosionsschutzmittel mindestens eines einer gewünschten Viskosität $\eta$, einer gewünschten Laufstrecke LS und einem gewünschten Verlustfaktor tan $\delta$ auf. Hierbei gilt

$$\eta = 47{,}811\ [mPa{*}s] + 4{,}788\ [mPa{*}s{*}g^{-1}] * (\text{Einwaage des funktionalisierten Wachses [g]}) + 6{,}040\ [mPa{*}s{*}g^{-1}] * (\text{Einwaage des grenzflächenaktiven Additivs [g]}) + 3{,}895\ [mPa{*}s{*}g^{-1}] * (\text{Einwaage des Korrosionsschutzadditivs [g]}) + 1{,}389\ [mPa{*}s{*}g^{-1}] * (\text{Einwaage des pH-Stabilisators [g]}) + 0{,}798\ [mPa{*}s{*}g^{-1}] * (\text{Einwaage des Korrosionsschutzadditives [g]}) + 1{,}629\ [mPa{*}s{*}g^{-2}] * (\text{Einwaage des Wachses oder wachsähnlichen Stoffes [g]} * \text{Einwaage des grenzflächenaktiven Additivs [g]}) - 0{,}888\ [mPa{*}s{*}g^{-2}] * (\text{Einwaage des grenzflächenaktiven Additivs [g]} * \text{Einwaage des pH-Stabilisators [g]}) + 1{,}018\ [mPa{*}s{*}g^{-2}] * (\text{Einwaage des Korrosionsschutzadditives 1 [g]} * \text{Einwaage des Korrosionsschutzadditives 2 [g]});$$

$$LS\ [cm] = 17,18\ [cm] - 2,325\ [cm{*}g^{-1}] * (\text{Einwaage des funktionalisierten Wachses}$$
$$[g]) - 6,625\ [cm{*}g^{-1}] * (\text{Einwaage eines grenzflächenaktiven Additivs } [g]) + 4,70 * [cm{*}g^{-2}] *$$
$$(\text{Einwaage des funktionalisierten Wachses } [g])^2 - 1,625\ [cm{*}g^{-2}] * (\text{Einwaage des funktio-}$$
$$\text{nalisierten Wachses } [g] * \text{Einwaage des grenzflächenaktiven Additivs } [g]);$$

und

$$\tan \delta\ [\ ] = 0,5936\ [\ ] - 0,0215\ [g^{-1}] * (\text{Einwaage des funktionellen Wachses } [g]) +$$
$$0,0353\ [g^{-1}] * (\text{Einwaage des grenzflächenaktiven Additivs } [g]) - 0,303\ [g^{-1}] * (\text{Einwaage}$$
$$\text{des Korrosionsschutzadditivs 1 } [g]) + 0,0426\ [g^{-1}] * (\text{Einwaage des pH-Stabilisators } [g]) -$$
$$0,0962\ [g^{-2}] * (\text{Einwaage des funktionellen Wachses } [g] * \text{Einwaage des grenzflächenakti-}$$
$$\text{ven Additivs } [g]) + 0,0436 * [g^{-2}] * (\text{Einwaage des funktionellen Wachses } [g] * \text{Einwaage}$$
$$\text{des pH-Stabilisators } [g]) - 0,0529\ [g^{-2}] * (\text{Einwaage des grenzflächenaktiven Additivs } [g])^2,$$

wobei $\eta = 50$ mPa*s $\pm$ 10 mPa*s, LS = 25 cm $\pm$ 5 cm und $\tan \delta = 0,5 \pm 0,2$ ist.

Die bevorzugten Werte für die Viskosität, die Laufstrecke und den Verlustfaktor sind wie vorstehend angeben und können in den jeweiligen Wertebereichen unabhängig voneinander vorliegen.

Vorzugsweise sind zwei der vorstehenden Bedingungen erfüllt. Mithin weist das wasserbasierende Korrosionsschutzmittel (i) eine gewünschte Viskosität $\eta$ und eine gewünschte Laufstrecke LS, (ii) eine gewünschte Viskosität $\eta$ und einen gewünschten Verlustfaktor $\tan \delta$, oder (iii) eine gewünschte Laufstrecke LS und einen gewünschten Verlustfaktor $\tan \delta$ auf. Hierbei gilt ebenfalls $\eta = 50$ mPa*s $\pm$ 10 mPa*s, LS = 25 cm $\pm$ 5 cm bzw. $\tan \delta = 0,5 \pm 0,2$.

Mehr bevorzugt sind alle drei der vorstehenden Bedingungen erfüllt. Mithin weist das wasserbasierende Korrosionsschutzmittel einer gewünschten Viskosität $\eta$, eine gewünschte Laufstrecke LS und einen gewünschten Verlustfaktor $\tan \delta$ auf. Hierbei gilt ebenfalls $\eta = 50$ mPa*s $\pm$ 10 mPa*s, LS = 25 cm $\pm$ 5 cm bzw. $\tan \delta = 0,5 \pm 0,2$.

Gemäß noch einer weiteren bevorzugten Ausführungsform der vorliegenden Erfindung ist das grenzflächenaktive Additiv ausgewählt aus der Gruppe bestehend aus einem nichtionischen Emulgator, einem Alkylcarboxylat, einem Alkylbenzolsulfonat, oder einem Alkylethersulfat, wobei der nichtionische Emulgator die allgemeine Form R-(O-CH2-CH2-)x-OH aufweist, wobei R ein Alkylrest, Arylrest, Carbonsäurerest oder ein Derviat eines Carbonsäurerestes ist, und $3 \leq x \leq 50$ mit $x \in \mathbb{N}$.

Vorzugsweise gilt bei dem nichtionischen Emulgator $5 \leq x \leq 45$, $10 \leq x \leq 40$, $15 \leq x \leq 35$, oder $20 \leq x \leq 30$.

Das Alkylcarboxylat, Alkylbenzolsulfonat, oder Alkylethersulfat weisen unabhängig voneinander ein Molekulargewicht von 100 g/mol bis 1.000 g/mol, vorzugsweise 150 g/mol bis 900 g/mol, 200 g/mol bis 800 g/mol, 300 g/mol bis 700 g/mol, oder 400 g/mol bis 600 g/mol auf.

Der Alkylrest kann ein subsituierter oder unsubstituierter Alkyl-Rest sein. Beispielhafte Substituenten umfassen eine Methylgruppe, Ethylgruppe, Propylgruppe, Butylgruppe, Hydroxylguppe, Aminogruppe, Thiolgruppe, oder ein Halogen, insbesondere Fluor, Chlor, Brom, Iod.

Gemäß einer bevorzugten Ausführungsform der vorliegenden Erfindung weist das Korrosionsschutzmittel 2,0 bis 8,0 Gew.-% des funktionellen Wachses auf.

Vorzugsweise weist das Korrosionsschutzmittel 2,0 bis 7,0 Gew.-%, bspw. 3,0 bis 6,0 Gew.-%, oder 4,0 bis 5,0 Gew.-% des funktionellen Wachses auf.

Gemäß einer weiteren bevorzugten Ausführungsform der vorliegenden Erfindung ist das organische Bindemittel ausgewählt aus der Gruppe bestehend aus einem Kohlenwasserstoffharz, Polyurethanacrylat, Polyesteracrylat, Epoxyacrylat, ungesättigten bzw. gesättigten Polyestern und anderen funktionalisierten wässrigen Dispersionen.

Gemäß noch einer weiteren bevorzugten Ausführungsform der vorliegenden Erfindung enthält das wasserbasierende Korrosionsschutzmittel 0,1 bis 10,0 Gew.-% des Korrosionsschutzadditivs.

Vorzugsweise sind 0,2 bis 9,0 Gew.-%, bspw. 0,3 bis 8,0 Gew.-%, 0,4 bis 7,0 Gew.-%, 0,5 bis 6,0 Gew.-%, 0,75 bis 5,0 Gew.-%, oder 1,0 bis 2,0 Gew.-%, des Korrosionsschutzadditivs enthalten.

Gemäß einer bevorzugten Ausführungsform der vorliegenden Erfindung ist das Korrosionsschutzadditiv ausgewählt aus der Gruppe bestehend aus einem Alkalisulfonat, Erdalkalisulfonat, Alkalicarboxylat, Erdalkalicarboxylat, Kondensationsprodukt von Wachs- und /oder Fettsäuren gesättigt und/oder ungesättigt mit aliphatischen Aminen, Alkoholen und ähnlichen funktionellen Gruppen.

Alkali ist vorzugsweise ausgewählt aus Lithium, Natrium, oder Kalium, vorzugsweise Natrium oder Kalium. Erdalkali ist vorzugsweise ausgewählt aus Magnesium oder Calcium.

Die "ähnlichen funktionelle Gruppen" umfassen bspw. Thiole und Cyanate, Thiocyante und Isothiocyante.

Aliphatische Amine sind organische chemische Verbindungen, die vorwiegend aus Kohlenstoff, Stickstoff und Wasserstoff zusammengesetzt, mitunter Sauerstoff enthalten und nicht aromatisch sind. Die Kohlenstoffatome können hierbei linear angeordnet oder verzweigt sein. Die aliphatischen Amine weisen ein Molekulargewicht von i.A. 100 g/mol bis 2.000 g/mol, bspw. 200 g/mol bis 1.000 g/mol auf.

Gemäß einer weiteren bevorzugten Ausführungsform der vorliegenden Erfindung weist das wasserbasierende Korrosionsschutzmittel 10,0 bis 60,0 Gew.-% voll entsalztes Wasser mit einem Leitwert zwischen 0,5 und 5 $\mu$S * cm$^{-1}$ bei Raumtemperatur auf.

Vorzugsweise weist das wasserbasierende Korrosionsschutzmittel 20,0 bis 45,0 Gew.-%, bspw. 25,0 bis 40,0 Gew.-%, oder 30,0 bis 35,0 Gew.-%, voll entsalztes Wasser auf.

Vorzugsweise wird voll entsalztes Wasser mit einem Leitwert zwischen 0,6 und 2 $\mu$S * cm$^{-1}$, bspw. 0,7 bis 1 $\mu$S * cm$^{-1}$, oder 0,8 bis 0,9 $\mu$S * cm$^{-1}$, verwendet.

Gemäß noch einer weiteren bevorzugten Ausführungsform der vorliegenden Erfindung ist das Öl ausgewählt aus der Gruppe bestehend aus einem Gruppe I Öl, Gruppe II Öl, Gruppe III Öl, Gruppe IV Öl und Gruppe V Öl. Diese Öle können allein oder in Kombination verwendet werden.

Ein Gruppe I Öl kann mittels Solvent Raffination erhalten werden. Die verwendeten Gruppe I Öle können sowohl paraffinischer als auch naphthenischer Natur sein. Üblicherweise sind Gruppe I Öle ein Gemisch verschiedener Kohlenwasserstoffketten mit geringer oder keiner Gleichartigkeit. Gruppe I Öle sind daher gut verfügbar und kostengünstig

Ein Gruppe II Öl kann durch Hydrierung und Raffination erhalten werden. Beispielhafte Gruppe II Öle umfassen mineralische Motorenöle. Gruppe II Öle besitzen ein ausreichendes bis gutes Leistungsvermögen an Schmierstoffeigenschaften wie z. B. Verdampfungsneigung, Oxidationsbeständigkeit und Flammpunkt.

Ein Gruppe III Öl kann ebenfalls durch Hydrierung und Raffination erhalten werden. Gruppe III-Öle werden der höchsten Stufe der Mineralölraffination unterzogen. Sie bieten über eine große Bandbreite von Eigenschaften ein gutes Leistungsvermögen sowie eine gute Stabilität und Gleichartigkeit der Moleküle.

Ein Gruppe IV Öl ist ein synthetisches Öl, bspw. ein Polyalphaolefin (PAO) und sind ein gängiges Beispiel eines synthetischen Grundstoffes. Gruppe IV Öle weisen eine stabile chemische Zusammensetzung und einheitliche Molekülketten auf.

Gemäß einer bevorzugten Ausführungsform der vorliegenden Erfindung weist das wasserbasierende Korrosionsschutzmittel eine zweistufige Filmbildung auf.

Gemäß einer bevorzugten Ausführungsform der vorliegenden Erfindung findet eine autarke/eigenständige Gelbildung nach einer vorangegangener Belastung statt, und das wasserbasierende Korrosionsschutzmittel geht nach einer erneuten Belastung mit einer hohen Schergeschwindigkeit in einen fließfähigen Zustand, unter Absenkung der Viskosität, über, vorzugsweise wobei die hohe Schergeschwindigkeit $\dot{\gamma} \geq 500$ s$^{-1}$ ist.

Durch das Gelieren des Korrosionsschutzmittels in einem ersten Schritt wird hierbei eine ausreichende Fixierung des Korrosionsschutzmittel auf bspw. dem Bauteil erhalten, so dass ein Verlaufen bei Temperaturen von 20°C bis 30°C, vorzugsweise bei Raumtemperatur, vermieden wird. Die zweite Stufe erfolgt rein physikalisch durch Verdampfen/Abdunsten des Wassers, wodurch die fertige Korrosionsschutzbeschichtung erhalten wird.

So bildet die wHRK in einem ersten Schritt reversibel eine gelartige Überstruktur aus. Für die Trocknung wässriger Systeme ist ein Austausch der Luftmassen über der Grenzschicht unabdingbar. Da dies unter gegebenen Umständen, bspw. im Falle von Hohlräumen in Fahrzeugen, nur sehr eingeschränkt möglich ist, kommt die Trocknung nach Absättigung der lokalen Atmosphäre zum Erliegen. Durch die einsetzende Gelierung verfestigt das Material, ohne dass ein zusätzliches thermisches Verfahren notwendig wäre. Erst im Anschluss an die Gelierung und den dadurch vermittelten Halt der wHRK auf der Oberfläche, verfilmt das Material mit der Zeit durch eine azyklische Luftmassenbewegung und ein damit einhergehendes Verdunsten des Wassers vollständig.

Gemäß noch einer weiteren bevorzugten Ausführungsform der vorliegenden Erfindung weist das wasserbasierende Korrosionsschutzmittel eine schnelle Gelbildung bei einer Schergeschwindigkeit $\dot{\gamma}$ von 1 s$^{-1}$ bis 10 s$^{-1}$, bei 1 s $\leq$ t $\leq$ 80 s, auf.

Gemäß einer bevorzugten Ausführungsform, weist das wasserbasierende Korrosionsschutzmittel auf oder besteht aus: 0,5 bis 8,0 Gew.-% eines grenzflächenaktiven Additivs; 0,5 bis 4,0 Gew.-% eines funktionalisierten Wachses; 5,0 bis 30,0 % Gew.-% eines organischen Bindemittels; 0,5 bis 10,0 Gew.-% eines Korrosionsschutzadditivs; 20,0 bis 50,0 Gew.-% voll entsalzten Wassers (VEW); 10,0 bis 30,0 Gew.-% eines Öls; 2,0 bis 8,0 Gew.-% eines Wachses oder wachsähnlichen Stoffes; 0,1 bis 4,0 Gew.-% eines Neutralisationsmittels; 0,1 bis 4,0 Gew.-% eines pH-Stabilisators, und 0,1 bis 1,0 Gew.-% eines Biozids, bezogen auf 100 Gew.-% des wasserbasierenden Korrosionsschutzmittels.

In den Figuren zeigt

die Fig. 1 eine Veranschaulichung der Viskositätsentwicklung einer wässrigen Wachsdispersion in Abhängigkeit der Schergeschwindigkeit;

die Fig. 2 das Haupteffektdiagramm der Einflussgrößen auf die Zielgröße Viskosität;

die Fig. 3 das Wechselwirkungsdiagramm der Prädiktoren auf die Zielgröße Viskosität im Hinblick auf 2-fach-Wechselwirkungsbeziehungen;

die Fig. 4 das Haupteffektdiagramm der Einflussgrößen auf die Zielgröße Laufstrecke;

die Fig. 5 das Wechselwirkungsdiagramm der Prädiktoren auf die Zielgröße Laufstrecke im Hinblick auf 2-Fach-Wechselwirkungsbeziehungen;

die Fig. 6 Viskositätskurven in Abhängigkeit der Schergeschwindigkeit $\dot{\gamma}$ bei unterschiedlichen Emulgatorkonzentrationen;

die Fig. 7 die Viskositäts- und Laufstreckenentwicklung der wHRK in Abhängigkeit der Emulgatorkonzentration;

die Fig. 8 einen Vergleich von Spritzbildern nach pneumatischer Applikation bei unterschiedlichen Emulgatorkonzentrationen;

die Fig. 9 eine schematische Darstellung der Viskositätsentwicklung bei Einwaagevariation im Bereich von $\pm$ 20 Gew.-%;

die Fig. 10 den Viskositätsverlauf von Materialvarianten in Abhängigkeit der Schergeschwindigkeit ohne vorherige mechanische Beanspruchung;

die Fig. 11 den Viskositätsverlauf von Materialvarianten in Abhängigkeit der Schergeschwindigkeit nach mechanischer Beanspruchung;

die Fig. 12 die Laufstreckenentwicklung vor und nach mechanischer Beanspruchung entsprechender Systemformulierungen nach angepasster Zusammensetzung bezüglich grenzflächenaktiver Komponenten;

die Fig. 13 die multiple Regression des Verlustfaktors tan $\delta$ und Bewertung der, für die Zielgrößenbeschreibung relevanten Effekte;

die Fig. 14 Entwicklung des Strukturaufbaus tan $\delta$ und der Relaxationszeit $\Delta t$ nach vorheriger Druckbelastung;

die Fig. 15 Auslaufmengen gegen tan $\delta$ - Werte nach Druckbelastung;

die Fig. 16 eine Ansicht eines Standardhohlkörpers zum Aufbringen eines Korrosionsschutzmittels;

die Fig. 17 ein Beschichtungsbild eines Standardhohlkörpers; und

die Fig. 18 ein Beschichtungsbild des Standardhohlkörpers der Fig. 15 nach 480 Stunden Korrosionsbelastung.

Beispiel

Die Grundlage der Untersuchungen bildet eine Rezepturentwicklung deren Ergebnis in einer wHRK, mit den bereits beschrieben Eigenschaften, resultiert.

Die Basisrezeptur, ausgehend von der die eigentliche Rezeptur entwickelt wurde, kann der Tabelle 1 entnommen werden. Markiert sind die für die Betrachtung der Systemcharakteristika herangezogenen Komponenten innerhalb der Einwaagegrenzen von $\pm$ 20 Gew.-%.

Tabelle 1: wHRK Basisrezeptur

| Pos. | Komponente | 80 Gew.-% | Standard (Gew.-%) | 120% Gew.-% |
|------|------------|-----------|-------------------|-------------|
| 1 | Mineralöl | | 10 - 40 | |

(fortgesetzt)

| Pos. | Komponente | 80 Gew.-% | Standard (Gew.-%) | 120% Gew.-% |
|------|------------|-----------|-------------------|-------------|
| 2 | Organische Bindemittel | | 0 - 50 | |
| 3 | Funktionalisiertes Wachs | | 0 - 5 | |
| 4 | Wachs | | 0 - 15 | |
| 5 | Grenzflächenaktives Additiv | | 0 - 10 | |
| 6 | Korrosionsschutzadditiv | | 0 - 15 | |
| 7 | pH-Wert Stabilisator | | 0 - 5 | |
| 8 | VE-Wasser | | 20 - 60 | |
| 9 | Biozid | | 0 - 2 | |

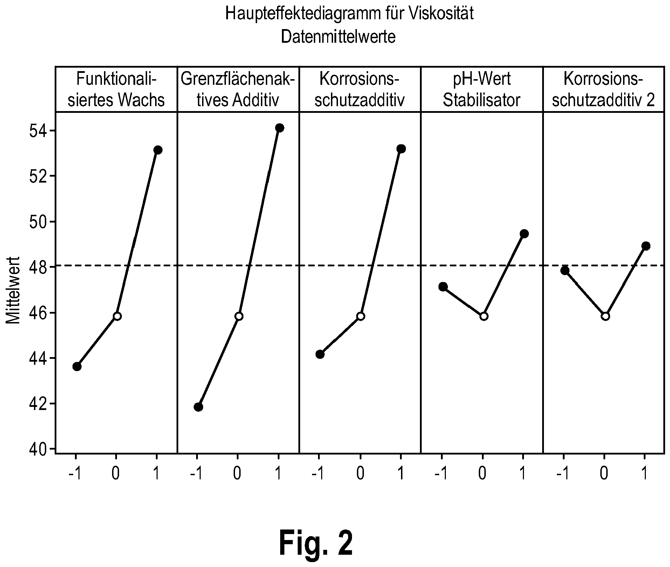

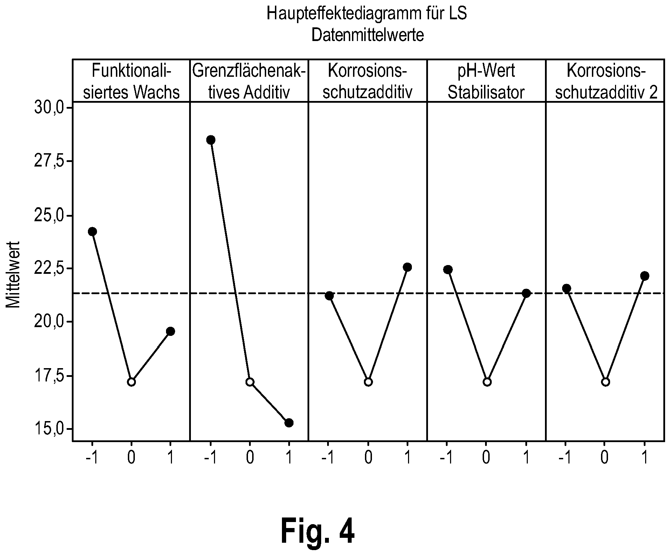

Das grenzflächenaktive Additiv nimmt einen wesentlichen Anteil an der Eigenschaftsbildung der wHRK ein. Dieser Zusammenhang ist in den Haupteffektdiagrammen für die jeweilige Zielgröße Viskosität (Fig. 2) und Laufstrecke (Fig. 4) dargestellt. Die Ermittlung entstammt den Versuchsreihen mit Hilfe des DoE.

So kann der Fig. 2 das Haupteffektdiagramm der Einflussgrößen auf die Zielgröße Viskosität entnommen werden. Es ist ersichtlich, dass das funktionalisierte Wachs, das grenzflächenaktive Additiv und das Korrosionsschutzadditiv jeweils einen starken Einfluss auf die Viskosität ausüben, dieser tritt bei dem pH-Wert Stabilisator und weiteren Korrosionsschutzinhibitoren in den Hintergrund, ist jedoch noch vorhanden.

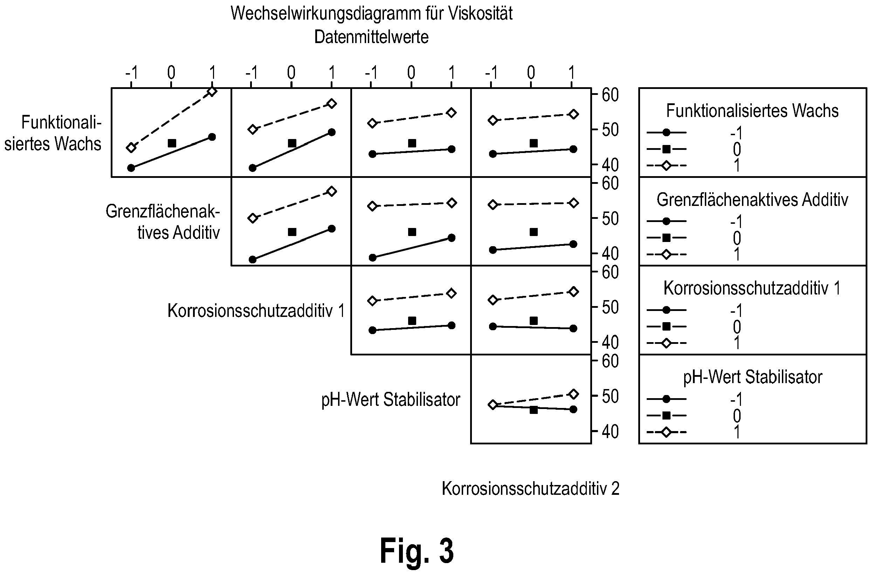

Anhand des Haupteffektdiagramm der Einflussgrößen auf die Zielgröße Viskosität werden nunmehr die Wechselwirkungen der Prädiktoren auf die Zielgröße Viskosität unter dem Fokus einer 2-fach-Wechselwirkungsbeziehung ermittelt. Das Entsprechende Wechselwirkungsdiagramm ist der Fig. 3 zu entnehmen.

Aus den festgestellten Komponentenpaarungen, lassen sich folgende Wechselwirkungsbeziehungen ableiten, bei denen bei veränderter Konzentration der einen Komponente, die Konzentrationsänderung der anderen Komponenten einen gegenläufigen Effekt zur Folge hat:

Funktionalisiertes Wachs * Grenzflächenaktives Additiv;

Grenzflächenaktives Additiv * pH-Stabilisator;

Korrosionsschutzadditiv 1; sowie

Korrosionsschutzadditiv 1* pH-Stabilisator.

Das Ergebnis für die Koeffizienten resultiert aus den normierten Faktorstufen. Das Absolutglied trägt die Einheit mPa·s. Die Koeffizienten sind mit der Einheit mPa·s/g versehen, welche sich in Verbindung mit den Prädiktoren als Einwaage in g zur Viskosität [$\eta$] in mPa·s kürzt. Daraus ergibt sich die Regressionsgleichung der Viskosität gemäß Gleichung 1:

η [mPa*s] = 47,811 [mPa*s] + 4,788 [mPa*s*g$^{-1}$] * (Einwaage des funktionalisierten Wachses [g]) + 6,040 [mPa*s*g$^{-1}$] * (Einwaage des grenzflächenaktiven Additivs [g]) + 3,895 [mPa*s*g$^{-1}$] * (Einwaage des Korrosionsschutzadditivs 1 [g]) + 1,389 [mPa*s*g$^{-1}$] * (Einwaage des pH-Wert Stabilisators [g]) + 0,798 [mPa*s*g$^{-1}$] * (Einwaage des Korrosionsschutzadditivs 1 [g]) + 1,629 [mPa*s*g$^{-2}$] * (Einwaage des Wachses oder wachsähnlichen Stoffes [g] * Einwaage des grenzflächenaktiven Additivs [g]) – 0,888 [mPa*s*g$^{-2}$] * (Einwaage des grenzflächenaktiven Additivs [g] * Einwaage des pH-Wert Stabilisators [g]) + 1,018 [mPa*s*g$^{-2}$] * (Einwaage des Korrosionsschutzadditives 1 [g] * Einwaage des Korrosionsschutzadditivs 2 [g]).

(Gleichung 1)

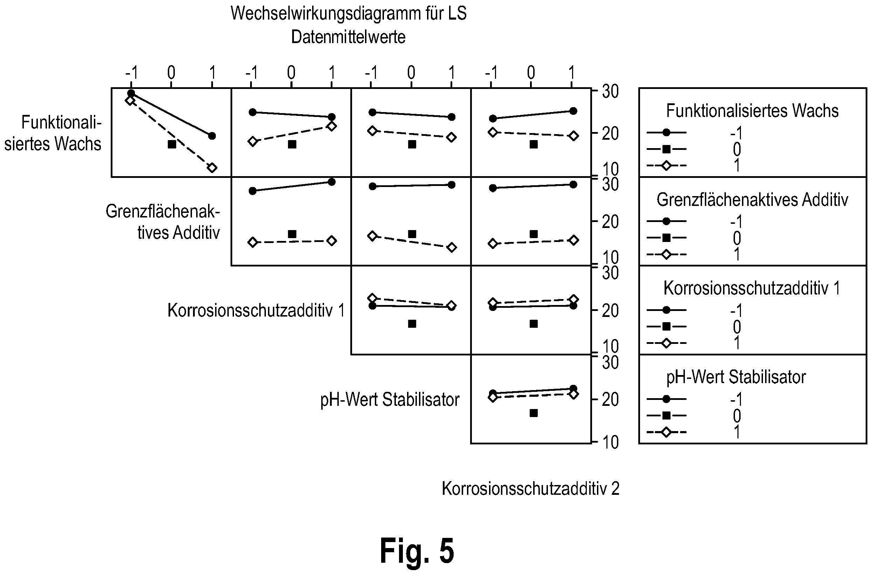

Das entsprechende Vorgehen für das Haupteffektdiagramm der Einflussgrößen auf die Zielgröße Laufstrecke (Fig. 4) ergibt das Wechselwirkungsdiagramm für Laufstrecke (Fig. 5) Im Hinblick auf 2-Fach-Wechselwirkungsbeziehungen. Diesem Diagramm sind aufgrund einer zunehmenden Antiparallelität zueinander, folgende signifikante Prädiktorenkombinationen zu isolieren:

Funktionalisiertes Wachs * Grenzflächenaktives Additiv; sowie
Funktionalisiertes Wachs * Korrosionsschutzadditiv 1.

Der Vorgang folgt analog dem Vorgehen für die Viskosität. Für die Einheiten des LS-Modells wird die Einheit mPa s durch cm ersetzt. Daraus resultiert die Regressionsgleichung in kodierten Einheiten, gemäß Gleichung 2:

$$LS =$$
$$17,18 - 2,325 * (\text{Funktionalisiertes Wachs}) - 6,625 * (\text{Grenzflächenaktives Additiv}) +$$
$$4,70 * (\text{Funktionalisiertes Wachs})^2 - 1,625 *$$
$$(\text{Funktionalisiertes Wachs} * \text{Grenzflächenaktives Additiv})$$

LS [cm] = 17,18 [cm] – 2,325 [cm*g$^{-1}$] * (Einwaage des funktionalisierten Wachses [g]) – 6,625 [cm*g$^{-1}$] * (Einwaage eines grenzflächenaktiven Additivs [g]) + 4,70 * [cm*g$^{-2}$] * (Einwaage des funktionalisierten Wachses [g])$^2$ - 1,625 [cm*g$^{-2}$] * (Einwaage des funktionalisierten Wachses [g])².

(Gleichung 2)

Aus den Ergebnissen der zielgrößenspezifischen Systemmodellierung lassen sich nun mehrere optimierte und/oder angepasste Zusammensetzungen ableiten, die in der Tabelle 2 aufgeführt sind.

Tabelle 2: Modellbezogene prognostizierte Zielgrößen durch optimierte Einwaagemengen der Systemkomponenten.

| Zielgröße | Viskosität in mPa·s | | Laufstrecke in cm | |
|---|---|---|---|---|
| Prädiktor | optimiert | Prognose | optimiert | Prognose |
| Funktionelles Wachs | 0[1] | -1 | 1 | 1 |
| Grenzflächenaktives Additiv | 0[1] | 1 | -0,78 | -1 |
| Korrosionsschutzadditiv 1 | 0[1] | 1 | 0[1] | 0' |

(fortgesetzt)

| Zielgröße | Viskosität in mPa·s | | Laufstrecke in cm | |
|---|---|---|---|---|
| Prädiktor | optimiert | Prognose | optimiert | Prognose |
| pH-Stab. | 1 | 1 | 0[1] | 0' |
| Korrosionsschutzaddidiv 2 | 1 | -1 | 0[1] | 01 |
| [1] Für die Zielgrößenbeschreibung irrelevante Prädiktoren werden analog der Grundrezeptur behandelt. | | | | |

Die jeweiligen Ergebnisse werden analog den bisherigen Methoden bestimmt. Eine Übersicht der gemessenen Zielgrößen der in Tabelle 2 vorgegebenen Ansätze, zeigt Tabelle 3. Das Prognoseintervall von 95 % ist Grundlage der Modellberechnungen und damit der Einwaagevorgaben. Die grau hinterlegten Felder markieren den resultierenden Messwert der Kontrollansätze. Diese sind gegen die vorgegebene Zielgröße zu vergleichen. Die Kenngrößen der Ansätze stimmen sehr gut zwischen Soll- und Istwert überein, und liegen innerhalb des angegebenen Vertrauensbereichs der jeweiligen Zielgröße.

Tabelle 3: Zusammenfassung der Ergebnisse im Vergleich zum Sollwert der Modellausgabe

| Kenngröße | Viskosität in mPa·s | | Laufstrecke in cm | |
|---|---|---|---|---|
| | optimiert | Prognose | optimiert | Prognose |
| Zielgröße | $50 \pm 6{,}0$ [1] | 50,0 | $26 \pm 9{,}4$ [1] | 27,8 |
| Ansatz für Viskosität in m·Pas | 46,8 | 51 | 13 [2] | 17 [3] |
| Ansatz für Laufstrecke in cm | 44,5 | 42,9 | 29 [4] | 26 [5] |
| Ansatz für tan $\delta$ | 58,9 | 35,5 | 19 [6] | 25 [7] |
| [1] Zielgrößenvorgabe gemäß dem Modell und dem Prognoseintervall von PI = 95 %. [2] r.F.: 46,5%; T: 26,7 °C    [3] r.F.: 45,6%; T: 26,6 °C [4] r.F.: 45,9%; T: 26,5 °C    [5] r.F.: 46,4%; T: 26,2 °C [6] r.F.: 52,1%; T: 25,7 °C    [7] r.F.: 53%; T: 26,6 °C | | | | |

Es zeichnet sich ab, dass eine Optimierung der jeweiligen Kenngrößen, lediglich unabhängig voneinander vorzunehmen ist. Als weiteres Ergebnis der Untersuchungen zeichnet sich die Schwierigkeit ab die unterschiedlichen Zielgrößen gleichzeitig zu optimieren.

Mit Hilfe der Modelle und den daraus erhaltenen Gleichungen 1 und 2 lassen sich nun Kombinationen errechnen, welche dem gemeinsamen Optimum in Bezug auf den Zielwertkorridor der Kenngrößen entspricht.

So führt die optimierte Viskosität zu einer deutlich reduzierten Laufstrecke unterhalb des zulässigen Grenzwertes. Bei der ideal eingestellten Laufstrecke liegt zwar die Viskosität noch im Soll der Spezifikation, allerdings entgleitet der Strukturaufbau. Das so optimierte Material verhält sich demnach mehr viskos und weniger gelartig.

Mit Hilfe der generierten Modelle ist es möglich alle Zielgrößen durch Vorgaben der Komponenteneinwaagen zu berechnen und einen Zielkorridor für alle relevanten Systemeigenschaften zu ermitteln. Dies ist rein rechnerisch möglich, ohne lange Versuchsreihen gemäß dem Versuch und Irrtum Prinzip (Trial and Error) durchführen zu müssen, was Ressourcen jeglicher Art verbraucht. Anhand dieses Vorgehens lassen sich so nur noch die aus der Berechnung zielführenden Versuche selektieren und sind hinsichtlich ihrer Übereinstimmung zu überprüfen.

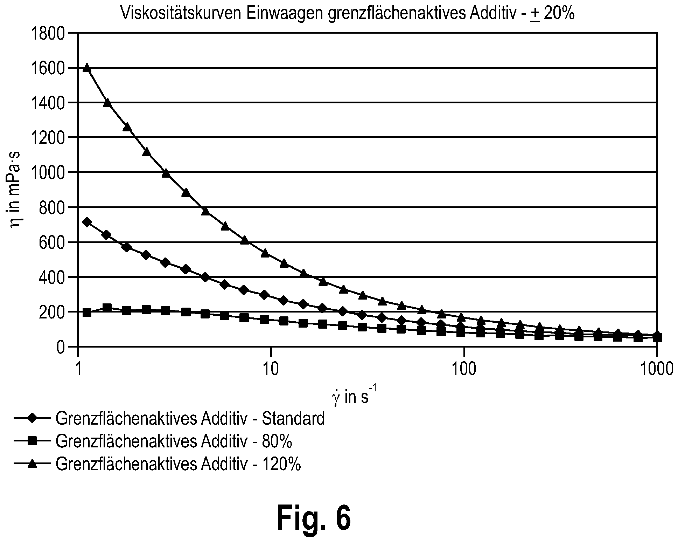

Übertragen in die Praxis ergeben sich bei einer um $\pm$ 20 Gew.-% variierenden Einwaage an grenzflächenaktivem Additiv die in Fig. 6 zusammengefassten Viskositätskurven in Abhängigkeit von der Schergeschwindigkeit bei unterschiedlichen Emulgatorkonzentrationen. Der Schergeschwindigkeitsbereich für die Betrachtung wurde dabei von $\dot{\gamma}$ = 1 s$^{-1}$ bis $\dot{\gamma}$ = 1.000 s$^{-1}$, gewählt. Dieses Betrachtungsfenster umfasst den Low-shear-Bereich ($\dot{\gamma}$1 s$^{-1}$ $\leq \dot{\gamma} \leq$ 500 s$^{-1}$), in dem ein gravitationsbedingtes Fließen ($\dot{\gamma}$1 s$^{-1}$ $\leq \dot{\gamma} \leq$ 10 s$^{-1}$) stattfindet, sowie den High-shear-Bereich ($\dot{\gamma}$ > 500 s$^{-1}$, insbesondere 500 s$^{-1}$ < $\dot{\gamma} \leq$ 1.000 s$^{-1}$) welcher die Scherbelastung während der Spritzapplikation wiederspiegelt. Das zu untersuchende Material wurde zuvor durch eine Miniringleitung zirkuliert und damit der mechanischen Belastung innerhalb der Peripherie bis zum Applikator unterzogen.

Bei der zyklischen Förderung des Probenmaterials wechselwirkt dieses mit der Innenwandung der Anlage. Hierin sind die zentralen Einflussgrößen enthalten, um die Rheologie zu beschreiben. Die Definition der Viskosität $\eta$ lässt sich entsprechend auf die Ringleitung übersetzen. Der, für die Zirkulation des Materials erforderliche Druck p, definiert sich als $\frac{F}{A}$. Er entspricht damit, rein physikalisch gesehen, der Schubspannung $\tau$. Die Scherrate $\dot{\gamma}$ ist über eine sich temporär verändernde Deformation zu verstehen. Das System wird dabei um die Weglänge s ausgelenkt. Somit liegt ein Analogon zur Geschwindigkeit v vor. Diese ist durch die Öffnung am Ende der Leitung gegeben. Mit Hilfe des Gesetzes von Hagen und Poiseuille lässt sich die Viskosität berechnen. Hierfür ist ein parabolisches Geschwindigkeitsprofil, mit der maximalen Geschwindigkeitsänderung am Punkt der größten Steigung anzunehmen. Der Volumenstrom $\dot{V}$, sowie die Scherrate $\dot{\gamma}$, welche während der Zirkulation auf die Dispersion wirkt, müssen bekannt sein.

$$\dot{V} = \frac{dV}{dt} = \frac{\pi \cdot r^4}{8 \cdot \eta} \cdot \frac{\Delta p}{l} \qquad\qquad \text{Gleichung 3}$$

Daraus lässt sich für die Viskosität $\eta$ umstellen in:

$$\eta = \frac{\pi \cdot r^4}{8 \cdot \dot{V}} \cdot \frac{\Delta p}{l} \qquad\qquad \text{Gleichung 4}$$

Die Scherrate $\dot{\gamma}$ errechnet sich demnach wie folgt:

$$\dot{\gamma} = \frac{4 \cdot \dot{V}}{\pi \cdot r^3} \qquad\qquad \text{Gleichung 5}$$

Anhand der gerätetechnischen Daten der Mini-Ringleitung (RL) mit einem:
Voreingestellten Druck von p = 120 bar, einem Radius von r = 1,0 · 10⁻³ m, und einem Volumenstrom von $\dot{V}$ = 10·10⁻⁶"m/s ergibt sich somit eine Scherrate von $\dot{\gamma} \approx$ 12.500 s⁻¹.

Das System reagiert entsprechend und wird niederviskoser. Viskositätsabnahmen bis zu 50 % gegenüber der Standardmessung bei Schergeschwindigkeiten von $\dot{\gamma}$ = 1.000 s⁻¹ aus der Ruhe heraus, sind dabei typisch für das System. Über eine Betrachtung der Viskosität im Low-shear-Bereich, sowie im High-shear-Bereich wird nun das Relaxationsvermögen und der erneute Viskositätsabfall mit steigender Schergeschwindigkeit ermittelt.

Als Messgerät wird vorzugsweise ein Rheolab QC (Anton Paar, Österreich) mit zugehörigem Zylinder-Messsystem nach den Herstellerangaben verwendet. Die Scherrate wird zur Vorscherung mit $\dot{\gamma}$ = 1.000 s⁻¹ konstant gehalten. Der zentrale Messabschnitt wir mit einer logarithmischen Scherratenrampe von $\dot{\gamma}$ = 0,01 s⁻¹ bis 1.000 s⁻¹ aufgelöst um die Viskositätswerte im Low-shear-Bereich, sowie im High-shear-Bereich zu bestimmen.

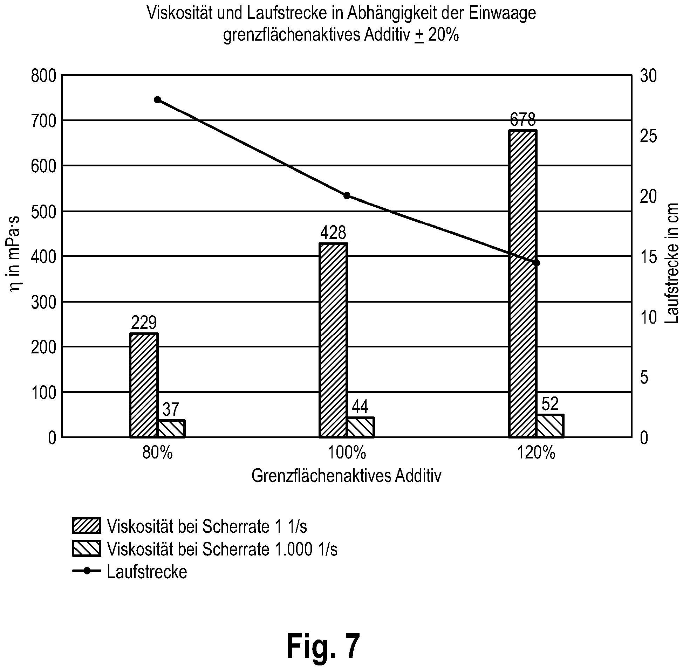

Bei der Betrachtung von Fig. 6 zeichnet sich eine Variation der drei Ansätze bei einer Schergeschwindigkeit von $\dot{\gamma}$ = 1.000 s⁻¹ ab. Dies entspricht der Darstellung des Einflusses des grenzflächenaktiven Additivs in Fig. 2. Bezogen auf die Laufstrecke (Fig. 4) ergibt sich das gleiche Bild. In Fig. 7 sind die beiden Kenngrößen Viskosität und Laufstrecke der wHRK in Abhängigkeit der Emulgatorkonzentration in einem Diagramm zusammengefasst.

Der aus der Modellierung bekannte Anstieg der Viskosität bei erhöhter Zugabe an grenzflächenaktivem Additiv wird sowohl im High-shear- als auch im Low-shear-Bereich, beobachtet. Der Effekt wird besonders zu niedrigeren Schergeschwindigkeiten hin eindeutig. Damit ist der relativ steile Abfall der Laufstrecken erklärt, da die bei dieser Messung wirkenden Scherkräfte im Bereich 0,5 s⁻¹ $\leq \dot{\gamma} \leq$ 5 s⁻¹ anzunehmen sind.

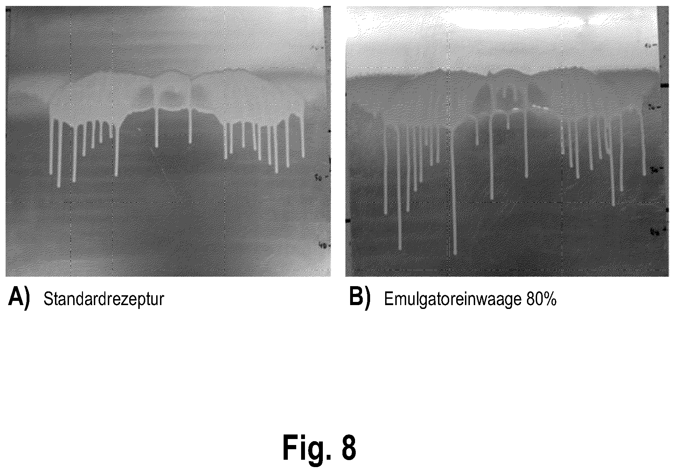

Übertragen auf die Praxis wird das Material auf Flachbleche appliziert und das Ablaufverhalten von den senkrecht ausgestellten Flachblechen über den Zeitraum von t = 60 s bestimmt. Die Fig. 8 zeigt hierzu den Vergleich der Spritzbilder nach pneumatischer Applikation bei unterschiedlichen Emulgatorkonzentrationen bezogen auf Tabelle 6 mit um 20 % reduzierter Konzentration grenzflächenaktiven Additivs.

Aus den Ablaufbildern lässt sich der Einfluss des Emulgators hinsichtlich dem Ablaufverhalten klar abbilden. Dieses Verfahren ist für eine Einschätzung der Liniengängigkeit allgemein, insbesondere auf Abnehmerseite, erprobt und dient der Qualitätsbewertung. Auch hierbei wird das unterschiedliche Fließverhalten anhand des Vergleichs eines Ansatzes mit reduzierter Konzentration des grenzflächenaktiven Additivs gegenüber dem Standard klar ersichtlich.

Basierend auf diesen Erkenntnissen ist es somit möglich durch Variation der grenzflächenaktiven Substanzen im Bereich von ± 20 Gew.-%, sowie eine gezielte Substitution der eigenschaftsbestimmenden Komponenten durch funktionell analoge Stoffe oder Zubereitungen, kundenspezifische oder applikationsoptimierte Materialien zu entwickeln und/oder einzustellen.

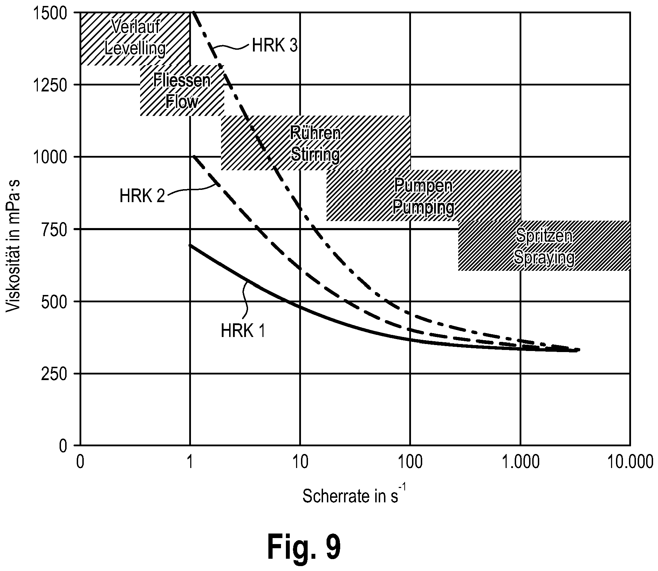

In der Fig. 9 ist schematisch die Entwicklung der Viskosität über den jeweiligen Grad der mechanischen Beanspruchung, übersetzt in die jeweiligen Prozessschritte über die Schergeschwindigkeit im Bereich $\dot{\gamma}$ = 1 s⁻¹ bis 1.000

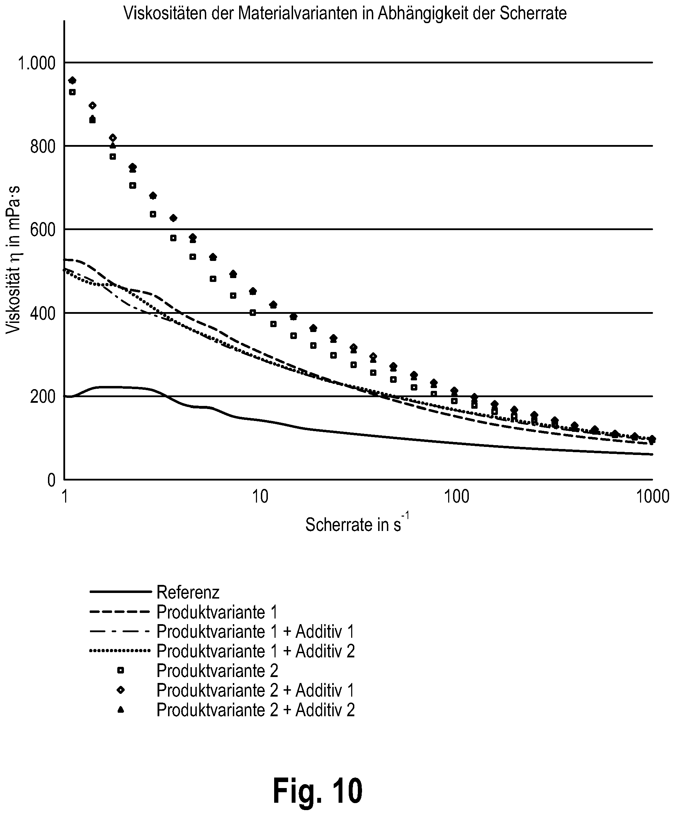

s$^{-1}$ von drei Materialien gleicher Basis mit variierender Rohstoffeinwaage einer Komponente von $\pm$ 20 % dargestellt (s. auch Fig. 10). Bezogen auf Tabelle 4 mit um 20 % reduzierter Konzentration grenzflächenaktiven Additivs (Produktvariante 1) und des Korrosionsschutzadditivs (Produktvariante 2).

Im Regelfall ist die Schergeschwindigkeit vorgegeben und die Aufrechterhaltung der Schubspannung wird messtechnisch erfasst. So zeigt Fig. 9 die schematische Darstellung der Viskositätsentwicklung bei Einwaagevariation im Bereich von $\pm$ 20 Gew.-%. Es ist ersichtlich, dass mit zunehmender Schergeschwindigkeit die Viskosität signifikant abnimmt, wobei die finalen Messwerte, unabhängig von der Ruheviskosität, im Wesentlichen auf einen Endwert konvergieren. Dieses gewährt einen sauberen und guten Verlauf, selbst in komplexen Konstruktionen. Im Anschluss bilden sich wieder die vormals zerscherten Strukturen aus und generieren erneut Gele oder erhöhen die Viskosität soweit, dass das Material zum Stehen kommt. Alle bisher beschrieben Effekte sind rein physikalischer Natur und beliebig oft, da reversibel, wiederholbar.

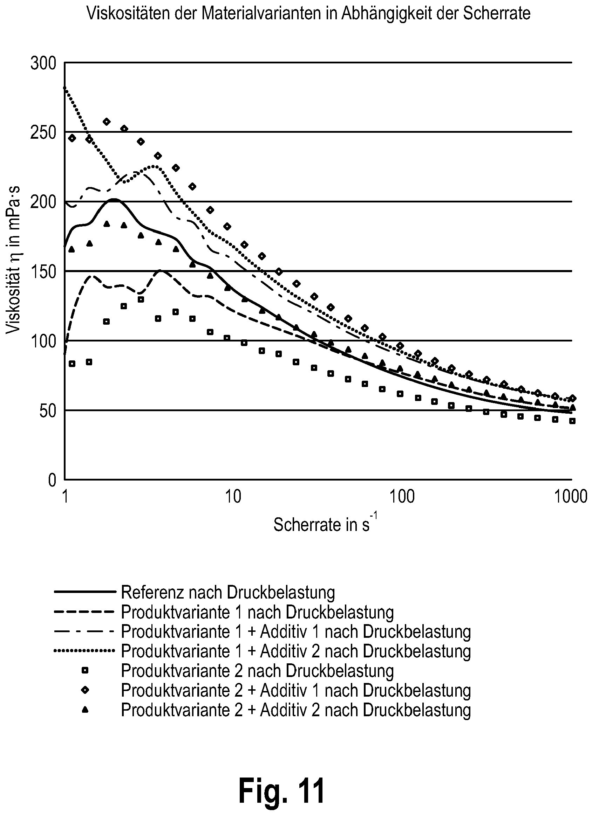

Dieses Verhalten wird auch entwicklungsseitig erreicht, wie den Fig. 10 und 11 entnommen werden kann. Hier sind direkte Anpassungen der Viskosität über entsprechende Ansätze auf Basis einer Verhältnismodifikation der grenzflächenaktiven Systemkomponeten zusammengefasst. Trotz hoher Ruheviskositäten im Schergeschwindigkeitsbereich von $\dot\gamma$ = 1 s$^{-1}$ zeichnet sich der nivellierende Effekt mit zunehmender Schergeschwindigkeit zu niedrigen Viskositäten hin deutlich ab. Diese Viskositätserniedrigung kann bis zu einer 10er Potenz betragen.

Die Fig. 10 zeigt hierzu den Viskositätsverlauf von Materialvarianten in Abhängigkeit der Schergeschwindigkeit ohne vorherige mechanische Beanspruchung. Die Fig. 11 zeigt die Graphen derselben Materialien nach erfolgter mechanischer Systembelastung. Hierbei wird eine weitere Eigenschaft des Systems verdeutlicht. Durch die Druckbelastung kommt es zu einer Gleichgewichtsverschiebung der Löslichkeiten der stabilisierenden, grenzflächenaktiven Verbindungen infolge der Energiezufuhr in Form von Reibung durch die Zirkulation in der Leitung. Dadurch fällt die Viskosität nochmals ab. Dies kann je nach Formulierung und Anpassung weniger als $^{1}/_{6}$ der Ruheviskosität bzw. die Hälfte der High Shear-Viskosität bei $\dot\gamma$ = 1.000 s$^{-1}$ betragen. Dieser Effekt ist somit ebenfalls wieder über die Gehalte an grenzflächenaktiven Substanzen innerhalb des Systems steuerbar. Die bereits beschriebene Reversibilität bleibt ebenfalls erhalten.

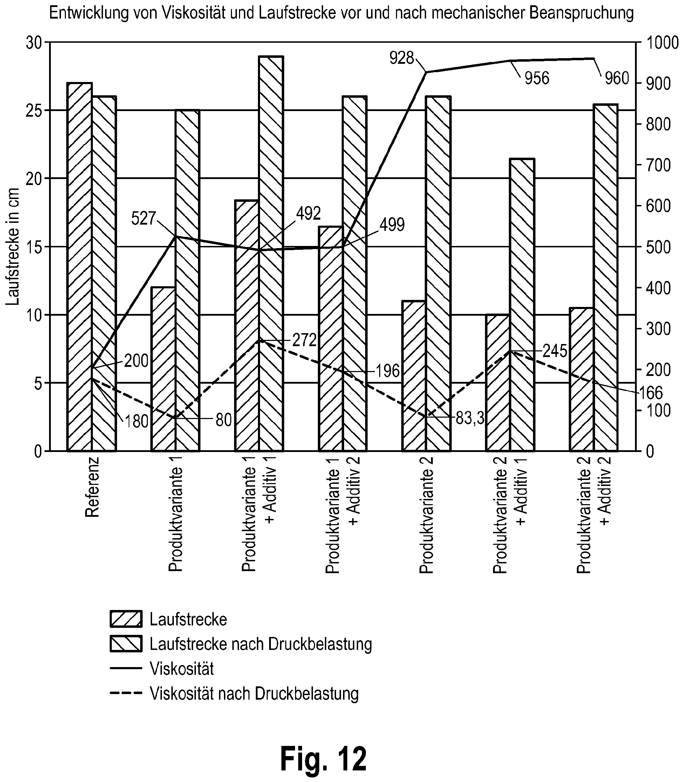

Die Übertragung auf die Laufstrecken kann der Fig. 12 entnommen werden. Der Zusammenhang der resultierenden Laufstrecken aus der Ruheviskosität ($\dot\gamma$ = 1 s$^{-1}$) wird aus der gezeigten Laufstreckenentwicklung vor und nach mechanischer Beanspruchung entsprechender Systemformulierungen nach angepasster Zusammensetzung bezüglich grenzflächenaktiver Komponenten ersichtlich.

Deutlich fällt der Einfluss einer vorherigen mechanischen Belastung auf. Dieser unterstützt zusätzlich den guten Verlauf und eine nahezu vollständige Penetration unmittelbar nach erfolgter Applikation.

Durch die Ausbildung einer Vielzahl von Wechselwirkungen zeichnet sich das System der wHRK durch ein viskoelastisches Verhaltens innerhalb der Grenzen des Hookeschen und des Newtonschen Gesetzes aus. Dieses kann messtechnisch mit Hilfe oszillierender Messanordnungen bestimmt werden.

Die Strukturstärke eines solchen Materials definiert sich über den Gel-Charakter. Dieser ist direkt an den Speichermodul G' gekoppelt. Er ist ein Maß für die im Probenmaterial reversibel gespeicherte Deformationsenergie. Er wird auch als Realteil einer Probe bezeichnet. Diese Energie wird durch das System während der Dauer der Scherbelastung aufgenommen und gespeichert. Sie steht nach Entlasten der Probe für die Relaxation und einen erneuten Strukturaufbau des Materials wieder vollständig zur Verfügung. Er stellt einen Absolutwert für den elastischen, festkörpergeprägten Teil der Probencharakteristik dar.

Definiert wird der Speichermodul G' in Form einer Cosinus-Funktion. Er ist über die Phasenverschiebung als rein elastische Komponente einer viskoelastischen Flüssigkeit zu berechnen (Gerth, C. (1980): Rheometrie, in: Bartholomé E., Biekert, E., Hellmann, H, Ley, H., Weigert, W.M., Weise, E., Ullmanns Enzyklopädie der technischen Chemie 4. Aufl. Bd. 5 Analysen- und Messverfahren, Weinheim: Verlag Chemie, S. 755 - 777; Mezger T. (2010): Das Rheologiehandbuch, 3. Aufl., Hannover: Vincentz Network; Rose, C. (1999): Stabilitätsbeurteilung von O/W-Cremes auf Basis der wasserhaltigen hydrophilen Salbe DAB 1996, Dissertation, Technische Universität Carola-Wilhelmina zu Braunschweig):

$$G' = \frac{\tau_A}{\gamma_A} \cdot \cos\delta \qquad\qquad \text{(Gleichung 6)}$$

Der Verlustmodul G'', auch Imaginärteil genannt, bezeichnet die rein viskose Komponente eines Materials. Er beschreibt die, in Form von innerer Reibung und Umlagerungsreaktionen, irreversibel verloren gegangene Deformationsenergie. Der Verlustmodul lässt sich durch eine Sinusfunktion ausdrücken (Gerth, C. (1980): Rheometrie, in: Bartholomé E., Biekert, E., Hellmann, H, Ley, H., Weigert, W.M., Weise, E., Ullmanns Enzyklopädie der technischen Chemie 4. Aufl. Bd. 5 Analysen- und Messverfahren, Weinheim: Verlag Chemie, S. 755 - 777; Mezger T. (2010): Das Rheologiehandbuch, 3. Aufl., Hannover: Vincentz Network; Rose, C. (1999): Stabilitätsbeurteilung von O/W-Cremes auf Basis der wasserhaltigen hydrophilen Salbe DAB 1996, Dissertation, Technische Universität Carola-Wilhelmina zu Braunschweig):

$$G'' = \frac{\tau_A}{\gamma_A} \cdot \sin\delta \qquad\qquad \text{(Gleichung 7)}$$

Mit Hilfe dieser beiden Moduln, errechnet sich der sogenannte Verlustfaktor tan $\delta$ wie folgt (Gerth, C. (1980): Rheometrie, in: Bartholomé E., Biekert, E., Hellmann, H, Ley, H., Weigert, W.M., Weise, E., Ullmanns Enzyklopädie der technischen Chemie 4. Aufl. Bd. 5 Analysen- und Messverfahren, Weinheim: Verlag Chemie, S. 755 - 777; Mezger T. (2010): Das Rheologiehandbuch, 3. Aufl., Hannover: Vincentz Network):

$$\tan\delta = \frac{G''}{G'} \qquad\qquad \text{(Gleichung 8)}$$

Zusammengefasst gilt:

- tan $\delta = \infty$, wenn G" >> und $\lim_{G'} 0$: ideal viskoses Verhalten

- tan $\delta > 1$, wenn G" > G': vordergründiges Verhalten entsprechend einer Flüssigkeit

- tan $\delta = 1$, wenn G' = G": Sol-/Gel-Übergangspunkt

- tan $\delta < 1$, wenn G' > G": vordergründiges Verhalten entsprechend eines Gels/Festkörpers

- tan $\delta = 0$, wenn G' >> und $\lim_{G''} 0$: idealelastisches Verhalten.

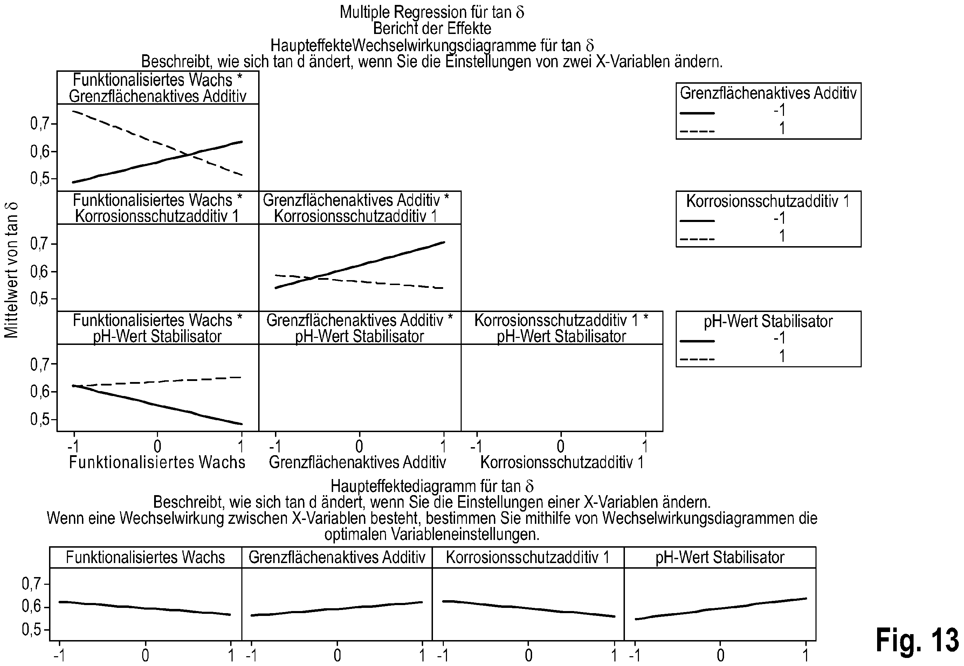

Mit Hilfe des Verlustfaktors lassen sich bspw. Aushärteprozesse reaktiver Systeme ableiten. Auch für den Verlustfaktor wurde mit Hilfe der statistischen Versuchsplanung eine Modellierung vorgenommen. Der Verlustfaktor tan $\delta$ $\delta$ wird durch drei wesentliche Variationen und Faktorkombinationen beeinflusst. Dies kann der Fig. 13 entnommen werden die die multiple Regression des Verlustfaktors tan $\delta$ und Bewertung der, für die Zielgrößenbeschreibung relevanten Effekte zeigt.

Es ist ersichtlich, dass der maßgebliche Einfluss auf die Zielgröße vorwiegend auf 2-Faktor Wechselwirkungen basiert (Gleichung 9). Einzig der pH-Wert Stabilisator zeigt einen Effekt als Einzelkomponente.

Mithin ergibt sich:

tan $\delta$ = 0,5936 − 0,0215 [g$^{-1}$] * (Einwaage des funktionellen Wachses [g]) + 0,0353 [g$^{-1}$] * (Einwaage des grenzflächenaktiven Additivs [g]) − 0,303 [g$^{-1}$] * (Einwaage des Korrosionsschutzadditivs [g]) + 0,0426 [g$^{-1}$] * (Einwaage des pH-Wert Stabilisators [g]) − 0,0962 [g$^{-2}$] * (Einwaage des funktionellen Wachses [g] * Einwaage des grenzflächenaktiven Additivs [g]) + 0,0436 * [g$^{-2}$] * (Einwaage des funktionellen Wachses [g] * Einwaage des pH-Wert Stabilisators [g]) − 0,0529 [g$^{-2}$] * (Einwaage des grenzflächenaktiven Additivs [g])².

(Gleichung 9)

$$\tan \delta =$$
$$0{,}5936 - 0{,}0215 * (\text{Funktionelles Wachs}) + 0{,}0353 * (\text{Grenzflächenaktives Additiv}) -$$
$$0{,}0303 * (\text{Korrosionsschutzadditiv}) + 0{,}0426 * (\text{pH} - \text{Stabilisator}) - 0{,}0962 *$$
$$(\text{Funktionelles Wachs} * \text{Grenzflächenaktives Additiv}) + 0{,}0436 * (\text{Funktionelles Wachs} *$$
$$\text{pH} - \text{Stabilisator}) - 0{,}0529 * (\text{Grenzflächenaktives Additiv} * \text{Korrosionsschutzadditiv})$$

Unter Berücksichtigung der berechneten Modellqualitäten, liegen alle Zielgrößen innerhalb der geforderten Spezifikation bzw. festgelegten Grenzbereiche (Tabelle 4).

Tabelle 4: Darstellung der Modellqualität über den Vergleich der sich daraus ergebenden Schwankungsbreiten im Vergleich zur Produktspezifikation

|  | Sollwert | R-Qd. in % | Schwankungsbreite Modell bezogen | Schwankungsbreite Produktspezifikation |
|---|---|---|---|---|
| Zielgröße |  |  |  |  |
| Viskosität in mPa·s | 50 | 93 | ±3,6 | ±10 |
| Laufstrecke in cm | 26 | 75 | ±6,6 | ±4 |
| tan δ | 0,5 | 60 | ±0,2 | - |

$$\tan \delta =$$
$$0{,}5936 - 0{,}0215 * (\text{Funktionelles Wachs}) + 0{,}0353 * (\text{Grenzflächenaktives Additiv}) -$$
$$0{,}0303 * (\text{Korrosionsschutzadditiv}) + 0{,}0426 * (\text{pH} - \text{Stabilisator}) - 0{,}0962 *$$
$$(\text{Funktionelles Wachs} * \text{Grenzflächenaktives Additiv}) + 0{,}0436 * (\text{Funktionelles Wachs} *$$
$$\text{pH} - \text{Stabilisator}) - 0{,}0529 * (\text{Grenzflächenaktives Additiv} * \text{Korrosionsschutzadditiv})$$

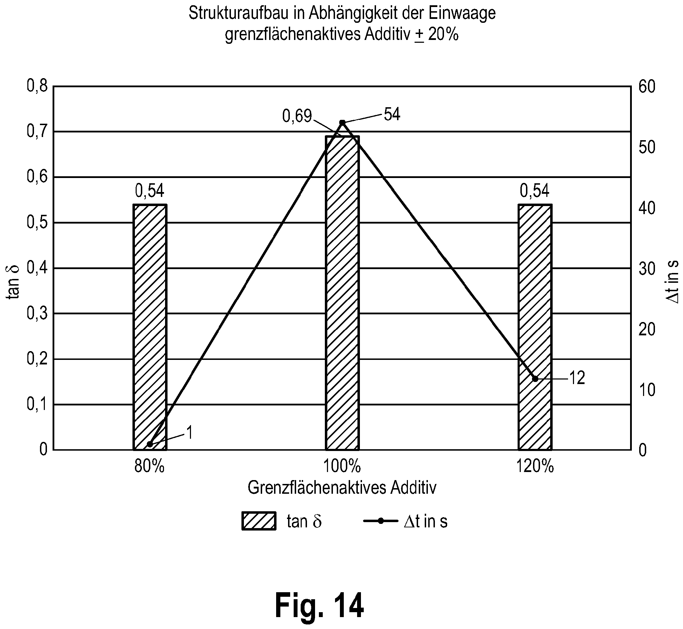

Am vorliegenden System der wHRK lässt sich bei Anwendung des Modells der Einfluss der Emulgatorkonzentration deutlicher auf die Eigenschaft des Strukturaufbaus feststellen. So zeigt die Fig. 14 die Entwicklung des Strukturaufbaus tan δ und der Relaxationszeit Δt nach vorheriger Druckbelastung. Die Zeitspanne Δt bis zum Erreichen des Sol-Gel-Überganges gibt Aufschluss darüber, wie lange das Material eine klar flüssige Form beibehält, bevor es wieder in einen gelartigen und damit eher elastischen Zustand übergeht. Im Falle der Penetration kann dies von hoher Bedeutung sein.

Neben der Dauer bis zum Aufbau der Struktur, um die Penetration zu gewährleisten, gilt es auch das Material in den zu schützenden Bereichen zu fixieren. Dies ist bei den komplexen Geometrien entscheidend, da sich aufgrund des begrenzten Volumens sehr schnell eine Wasserdampfsättigung einstellt und so eine physikalische Trocknung nicht mehr möglich wird, bevor die eigentliche Trocknung einsetzt. Daher ist ein steuerbarer Strukturaufbau von Vorteil.

Am Beispiel unterschiedlicher Materialvarianten (Tabelle 5) wird das Austropfverhalten bestimmt und gegeneinander verglichen. Hierzu werden 15 mL Material in einen Test-Schweller von 50 cm Länge appliziert. Nach einer Ruhephase von 7 h wird das Bauteil einmal um die Längsachse rotiert und in einem Winkel von ⪜15 ° aufgestellt. Anschließend wird die Auslaufende Menge an Material aufgefangen und zurückgewogen.

Tabelle 5: Ergebnisse Auslauftest

| Ansatz | η in mPa·s nach RL | | LS in cm | LS Flachblech in cm | Δt in s | tan δ | Auslaufmenge in g |
|---|---|---|---|---|---|---|---|
| | Schergeschwindigkeit γ 1 s⁻¹ | Schergeschwindigkeit γ 1.000 s⁻¹ | | | | | |
| Standard Laboransatz | 428 | 44 | 21 | 15 | 150 | 0,7 | 12,0 |
| 13 | 219 | 35 | 25 | 28 | 10 | 0,6 | 8,6 |
| 14 | 158 | 34 | 30 | 25 | 25 | 0,8 | 13,6 |
| 26 | 229 | 37 | 28 | 28 | 1 | 0,5 | 8,5 |

Das Material, mit einer um 20 Gew.-% verringerten Einwaage an Emulgator, zeigt im Vergleich zur Standardrezeptur (Tabelle 5, Ansatz 26) die geringste Auslaufmenge der untersuchten Ansätze. Obwohl die Referenz über die kürzesten Läuferlängen nach Applikation verfügt, ergibt sich eine größere Auslaufmenge. Ansatz 14 weist zwar ein gutes Ablaufverhalten nach Applikation auf, schneidet aber bezüglich der Auslaufmenge am Schlechtesten ab. Die ausgelaufenen Mengen korrelieren nicht mit dem Ablaufverhalten der Laufstrecken. Jedoch ist das austropfende Material proportional zum tan $\delta$ und damit zum Speichermodul (Gleichung . Der Verlustmodul eines Materials mit einem tan $\delta$ von 0,54 ist bei richtiger Rezeptierung immer noch ausreichend um die erforderliche Penetration unmittelbar nach Applikation, während des Zusammenfließens, zu gewährleisten. Dies liegt in der Tatsache des thixotropen Rheologieprofils für das System der wHRK begründet. Ein besonderes Merkmal der Emulsion besteht in ihrer Eigenschaft über einen Reifeprozess zu gelieren. Dieses Gel basiert rein auf physikalischen Wechselwirkungen und generiert eine Langzeitstabilität bei Normbedingungen (T = 20 °C; r.F. 60%) von mindestens über einem Jahr. Der beschriebene Strukturaufbau ist so stark, dass das Material Ruheviskositäten von $\eta \geq$ 1.000 mPa·s erreicht. Einzigartig dabei ist die Eigenschaft einer Egalisierung dieses Effektes durch ausreichend hohe Scherkräfte im Bereich von Schergeschwindigkeiten $\dot{\gamma} \geq$ 1.000 s$^{-1}$. Dadurch verflüssigt sich das Material wieder soweit, dass nicht nur entsprechende Distanzen vom Einstichloch zu schwer erreichbaren Konstruktionen innerhalb der Karossengeometrie überwunden werden können, sondern auch eine ausreichende Penetration in schmalste Falze und Spalten gewährleistet wird. Der im Material enthaltene elastische Anteil bewirkt nach einer gewissen Zeit einen erneuten Strukturaufbau. Das Material geliert erneut und wird so, immer noch flüssig, im Bauteil fixiert. So ist es möglich die Karosse mit dem Chassis in der Montage zu vereinigen, ohne auf thermisch initiierte Prozesse zurückgreifen zu müssen. Die Gelstärke ist ausreichend hoch um Drehungen, Kippen oder Schwenken der Karosse ohne nachträgliches Auslaufen zu überstehen. Dadurch ist ein sauberes und sicheres Arbeiten möglich. Die eigentliche, nach der Applikation ebenfalls einsetzende Trocknung zieht nach. Sie stellt allerdings einen Langzeitprozess, in Abhängigkeit der klimatischen Bedingungen, dar. Der Gelierungseffekt ist unter Ausschluss der Trocknung für das reine flüssige Material, im Rahmen der Prozessparameter und Drücken bis p = 120 bar, beliebig oft reversibel durchführbar.

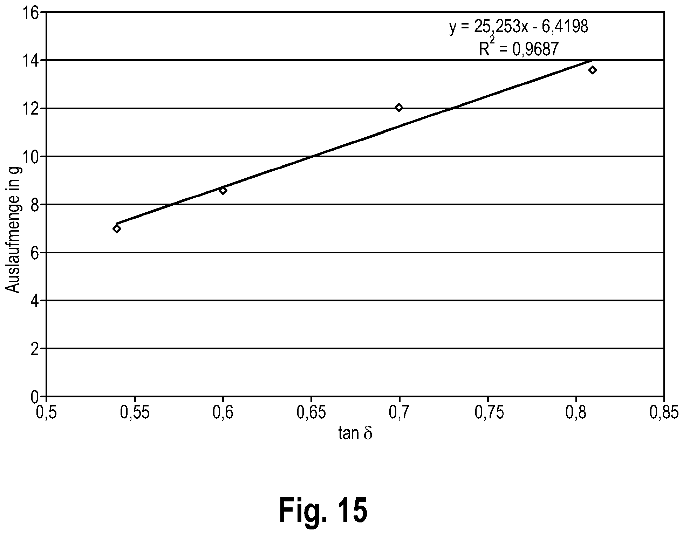

In Fig. 15 ist der Zusammenhang zwischen der Strukturstärke über den Verlustfaktor tan $\delta$ und der Auslaufmenge nach Druckbelastung dargestellt. Ein linearer Zusammenhang beider Größen ist darzustellen (Fig. 15). Mit einem Bestimmtheitsmaß von 0,969 lässt sich dieses erkennen.

Aus den Untersuchungen lässt sich eine Modellierung der Zielgrößen und der Materialeigenschaften direkt über die Rohstoffeinwaagen erzielen. Damit ist eine kundenspezifische Materialeinstellung gemäß den Applikationsanforderungen und den Bauteilgeometrien gegeben. Dadurch lässt sich eine optimale Beschichtung über Mengenanpassung und Materialreduktion erreichen, was einem nachhaltigen Grundsatzgedanken und Ressourcenschonung entsprechen. Unter Kenntnis der Einflussnahme durch die jeweiligen Rohstoffe ist es nun möglich auch weitere Rezepturen in Abhängigkeit der gewünschten Eigenschaften zu erstellen und so die Entwicklungsarbeit zu verbessern und zu erleichtern.

So zeigt die Tabelle 6 eine Beispielrezeptur einer wHRK gemäß der vorliegenden Erfindung

Tabelle 6: Beispielrezeptur einer wHRK

| Pos. | Komponente | CAS-Nummer | Standard (Gew.-%) |
|---|---|---|---|
| 1 | Mineralöl Group I | 64742-54-7 | 26,0 % |
| 2 | KW-Harz phenolmodifiziert | 71302-91-5 | 7,0 % |
| 3 | Paraffin-Wachs | 8002-74-2 | 5,1 % |
| 4 | Säurefunktionalisiertes-Wachs - Oxidiertes Petroleum-Wachs | 64743-00-6 | 5,0 % |
| 5 | Nichtionischer Emulgator auf Fettsäurebasis | 9002-92-0 | 2,4 % |
| 6 | erdölbasierende Sulfonsäuren bzw deren Calciumsalze | 61789-86-4 | 4,6 % |
| 7 | Styrol-Acrylat-Dispersion FK 50 % | 25085-34-1 | 17,0 % |
| 8 | Neutralisationsmittel | 100-37-8 | 0,5 % |
| 9 | pH-Stabilisator Ammoniak 30 % ig | 7664-41-7 | 0,1% |
| 10 | VE-Wasser | 7732-18-5 | 32,1% |
| 11 | Biozid | 2634-33-5 | 0,2% |

Die vorliegende wHRK verfügt über eine Viskosität von $\eta$ = 57 mPa s (50 mPa*s $\pm$ 10 mPa*s), gemessen bei 23 °C mit dem Rheolab QC (Anton Paar, Österreich) mit Rotation, einer Laufstrecke von LS = 20 cm (25 cm $\pm$ 5 cm)

und tan δ = 0,6 (0,5 ± 0,2) gemessen bei 23 °C, mit einer Kreisfrequenz ω = 10 rad/s und einer Deformation von γ = 5 % von mit dem MRC 302 (Anton Paar, Österreich) mit Oszillation.

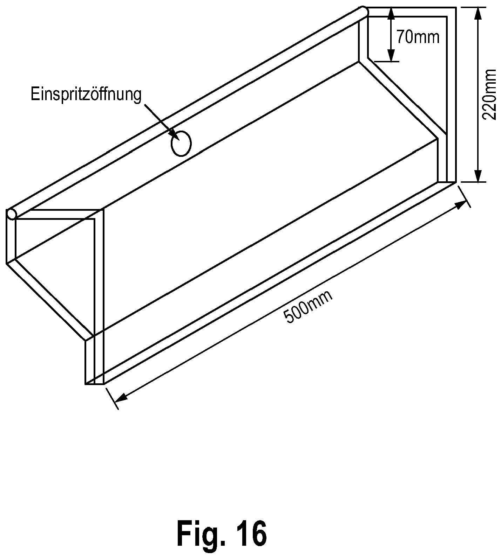

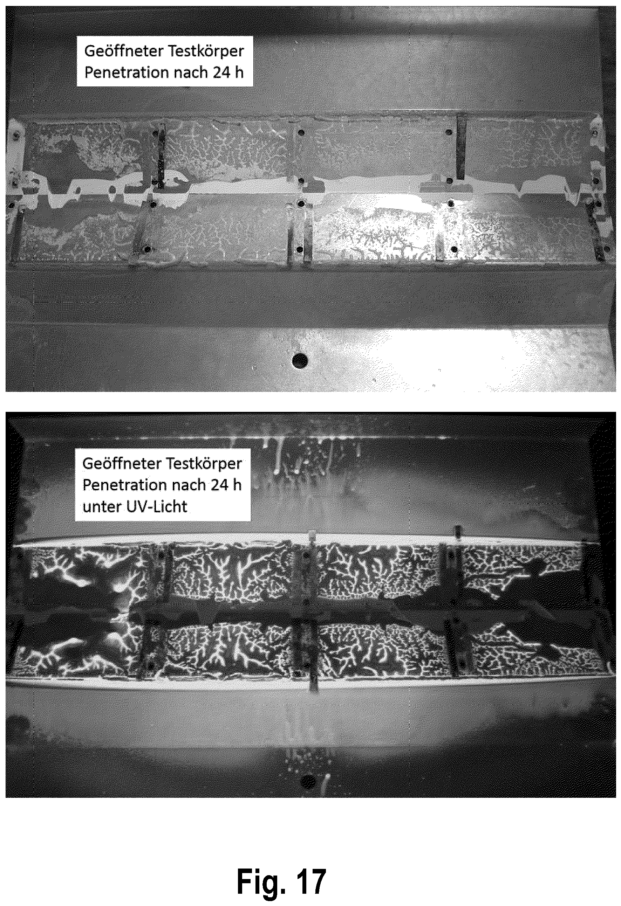

In einen Standardhohlkörper bzw. einen reduzierten "Testschweller" (Fig.16) mit integriertem Flansch (Blechdopplung) und einem Spaltmaß von 100 μm, wird die wHRK mittels Mehrfachdüse anwenderspezifisch, über das mittig platzierte Einspritzloch eingebracht. Die Applikationsparameter sind mit V = 15 mL und einem Zerstäuber(luft)druck von 5,5 bar und einem Materialdruck von 100 bar bis 120 bar festgelegt. Über die Ausbildung der Spritzkegel im inneren des Hohlkörpers erfolgt eine großflächige Benetzung, welche anschließend in das Ablaufen übergeht und dadurch die zu konservierenden Bereiche erreicht. Über Benetzungs- und Kapillareffekte breitet sich die wHRK aus, fließt zusammen, bedeckt dabei Ecken und Kanten und penetriert schließlich in Falze und Spalten ein. Das entsprechende Beschichtungsbild eines Standardhohlkörper ist Fig. 17 zu entnehmen. Die wHRK wurde hierbei wie beschrieben eingebracht und nach einer stehenden Lagerung für 24 h geöffnet. Dabei penetriert die wHRK in den gesamten Flanschbereich ein.

Die korrosionsschützenden Eigenschaften der wHRK erfolgen gemäß DIN EN ISO 9227 auf unterschiedlichen Substraten. Diese entsprechen standardgemäß den im Automobilbau verwendeten Materialien. Als Stahlsubstrat dient das Q-Panel R-36 von Q-Lab Deutschland GmbH, In den Hallen 30, D-66115 Saarbrücken, Germany mit den Abmessungen 76 mm x 152 mm und einer Dicke d = 0.81 mm. Im Vergleich dazu wird das verzinkte Substrat GARDOBONDO HDG 6 (HDG: Hot Dip Galvanized steel panel) der Chemetall GmbH Unternehmenskommunikation, Trakehner Str. 3, 60487 Frankfurt am Main, mit den Abmessungen 105 mm x 190 mm und einer Dicke d = 0.81 mm verwendet.

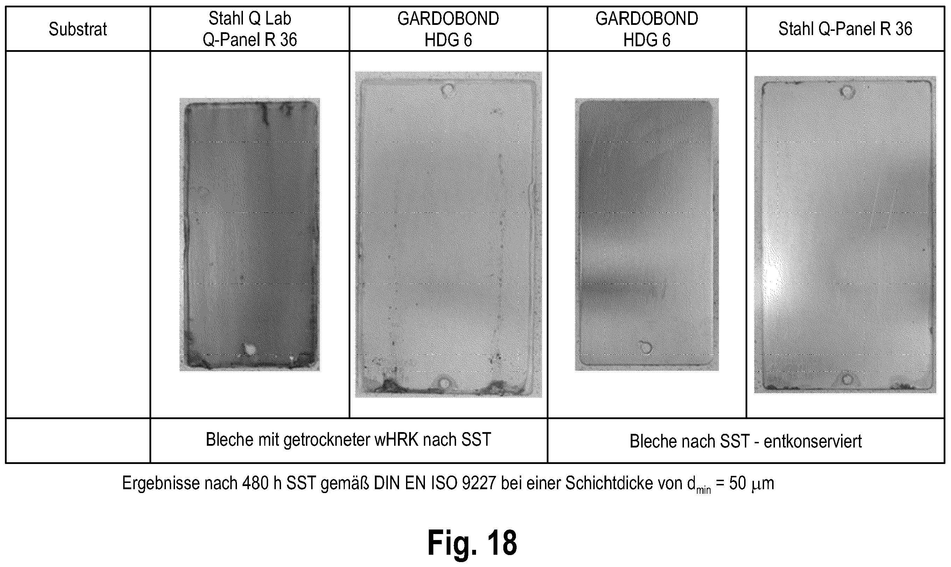

Die Applikation erfolgt pneumatisch bei ca. 3,5 bar Zerstäuberdruck mittels Becherpistole, z.B. SataJet®, mit einer Düsenöffnung von 0,8 mm bis 1,2 mm. Als Zielschichtdicke gelten mindestens 90 μm bis 100 μm nass, was einer Trockenschichtdicke von mindestens 50 μm entspricht. Die so applizierte Schicht wird für 72 h getrocknet und anschließend der Korrosionsprüfung (Salzsprühnebeltest - SST) unterzogen. Die Beschichtung zeigt bis mindestens 480 h keine Korrosion in korrosiver Atmosphäre. (Fig. 18).

**Patentansprüche**

1. Wasserbasierendes Korrosionsschutzmittel, aufweisend oder bestehend aus:

   0,1 bis 10,0 Gew.-% eines grenzflächenaktiven Additivs,
   0,0 bis 5,0 Gew.-% eines funktionalisierten Wachses,
   1,0 bis 40,0 % Gew.-% eines organischen Bindemittels,
   0,1 bis 15,0 Gew.-% eines Korrosionsschutzadditivs,
   10,0 bis 50,0 Gew.-% voll entsalzten Wassers (VEW),
   1,0 bis 40,0 Gew.-% eines Öls,
   1,0 bis 20,0 Gew.-% eines Wachses oder wachsähnlichen Stoffes,
   0,0 bis 5,0 Gew.-% eines Neutralisationsmittels,
   0,0 bis 5,0 Gew.-% eines pH-Stabilisators, und
   0,0 bis 2,0 Gew.-% eines Biozids, bezogen auf 100 Gew.-% des wasserbasierenden Korrosionsschutzmittels, und
   mindestens eines einer gewünschten Viskosität η, einer gewünschten Laufstrecke LS und einem gewünschten Verlustfaktor tan δ, mit

$$\eta = 47{,}811\ [mPa{*}s] + 4{,}788\ [mPa{*}s{*}g^{-1}] * (\text{Einwaage des funktionalisierten Wachses } [g]) + 6{,}040\ [mPa{*}s{*}g^{-1}] * (\text{Einwaage des grenzflächenaktiven Additivs } [g]) + 3{,}895\ [mPa{*}s{*}g^{-1}] * (\text{Einwaage des Korrosionsschutzadditivs 1 } [g]) + 1{,}389\ [mPa{*}s{*}g^{-1}] * (\text{Einwaage des pH-Stabilisators } [g]) + 0{,}798\ [mPa{*}s{*}g^{-1}] * (\text{Einwaage des Korrosionsschutzadditives 1 } [g]) + 1{,}629\ [mPa{*}s{*}g^{-2}] * (\text{Einwaage des Wachses oder wachsähnlichen Stoffes } [g] * \text{Einwaage des grenzflächenaktiven Additivs } [g]) - 0{,}888\ [mPa{*}s{*}g^{-2}] * (\text{Einwaage des grenzflächenaktiven Additivs } [g] * \text{Einwaage des pH-Stabilisators } [g]) + 1{,}018\ [mPa{*}s{*}g^{-2}] * (\text{Einwaage des Korrosionsschutzadditives 1 } [g] * \text{Einwaage des Korrosionsschutzadditives 2 } [g]);$$

LS [cm] = 17,18 [cm] − 2,325 [cm*g$^{-1}$] * (Einwaage des funktionalisierten Wachses [g]) − 6,625 [cm*g$^{-1}$] * (Einwaage eines grenzflächenaktiven Additivs [g]) + 4,70 * [cm*g$^{-2}$] * (Einwaage des funktionalisierten Wachses [g])$^2$ - 1,625 [cm*g$^{-2}$] * (Einwaage des funktionalisierten Wachses [g] * Einwaage des grenzflächenaktiven Additivs [g]);

und

tan δ [ ]= 0,5936 [ ] − 0,0215 [g$^{-1}$] * (Einwaage des funktionellen Wachses [g]) + 0,0353 [g$^{-1}$] * (Einwaage des grenzflächenaktiven Additivs [g]) − 0,303 [g$^{-1}$] * (Einwaage des Korrosionsschutzadditivs [g]) + 0,0426 [g$^{-1}$] * (Einwaage des pH-Wert Stabilisators [g]) − 0,0962 [g$^{-2}$] * (Einwaage des funktionellen Wachses [g] * Einwaage des grenzflächenaktiven Additivs [g]) + 0,0436 * [g$^{-2}$] * (Einwaage des funktionellen Wachses [g] * Einwaage des pH-Wert Stabilisators [g]) − 0,0529 [g$^{-2}$] * (Einwaage des grenzflächenaktiven Additivs [g] * Einwaage des grenzflächenaktiven Additivs [g]),

wobei $\eta$ = 50 mPa*s $\pm$ 10 mPa*s, LS = 25 cm $\pm$ 5 cm und tan $\delta$ = 0,5 $\pm$ 0,2 ist,
wobei die gewünschte Viskosität $\eta$, die gewünschte Laufstrecke LS und der gewünschte Verlustfaktor tan $\delta$ gemäß der Beschreibung bestimmt werden.

2. Wasserbasierendes Korrosionsschutzmittel gemäß Anspruch 1, wobei das Korrosionsschutzmittel eine gelbildende Komponente aufweist und das Korrosionsschutzmittel nach Applikation eigenständig (ohne zusätzlichen Energieeintrag und ohne jegliche weiteren stofflichen Veränderungen vor dem eigentlichen Trocknungsprozess durch Gelbildung) verfestigt.

3. Wasserbasierendes Korrosionsschutzmittel gemäß einem der Ansprüche 1 bis 2, wobei das grenzflächenaktive Additiv ausgewählt ist aus der Gruppe bestehend aus einem nichtionischen Emulgator, einem Alkylcarboxylat, einem Alkylbenzolsulfonat, oder einem Alkylethersulfat, wobei der nichtionische Emulgator die allgemeine Form R-(O-CH2-CH2-)$_x$-OH aufweist, wobei R ein Alkylrest, Arylrest, Carbonsäurerest oder ein Derviat eines Carbonsäurerestes ist, und 3 $\leq$ x $\leq$ 50 mit $x \in \mathbb{N}$ .

4. Wasserbasierendes Korrosionsschutzmittel gemäß einem der Ansprüche 1 bis 3, wobei das Korrosionsschutzmittel 2,0 bis 8,0 Gew.-% des funktionellen Wachses aufweist.

5. Wasserbasierendes Korrosionsschutzmittel gemäß einem der Ansprüche 1 bis 4, wobei das Neutralisationsmittel ein Amin ist.

6. Wasserbasierendes Korrosionsschutzmittel gemäß einem der Ansprüche 1 bis 5, wobei das organische Bindemittel ausgewählt ist aus der Gruppe bestehend aus einem Kohlenwasserstoffharz, Polyurethanacrylat, Polyesteracrylat, Epoxyacrylat, ungesättigten bzw. gesättigten Polyestern und anderen funktionalisierten wässrigen Dispersionen ist.

7. Wasserbasierendes Korrosionsschutzmittel gemäß einem der Ansprüche 1 bis 6, wobei das Korrosionsschutzmittel 0,1 bis 10,0 Gew.-% des Korrosionsschutzadditivs enthält.

8. Wasserbasierendes Korrosionsschutzmittel gemäß einem der Ansprüche 1 bis 7, wobei das Korrosionsschutzadditiv ausgewählt ist aus der Gruppe bestehend aus einem Alkalisulfonat, Erdalkalisulfonat, Alkalicarboxylat, Erdalkalicarboxylat, Kondensationsprodukt von Wachs- und /oder Fettsäuren gesättigt und/oder ungesättigt mit aliphatischen Aminen, Alkoholen oder ähnlichen funktionellen Gruppen ist.

9. Wasserbasierendes Korrosionsschutzmittel gemäß einem der Ansprüche 1 bis 8, wobei das wasserbasierende Korrosionsschutzmittel 10,0 bis 60,0 Gew.-% voll entsalztes Wasser mit einem Leitwert zwischen 0,5 und 5 $\mu$S * cm$^{-1}$ bei Raumtemperatur aufweist.

10. Wasserbasierendes Korrosionsschutzmittel gemäß einem der Ansprüche 1 bis 9, wobei das Öl ausgewählt ist aus der Gruppe bestehend aus einem Gruppe I Öl, Gruppe II Öl, Gruppe III Öl, Gruppe IV Öl und Gruppe V Öl.

11. Wasserbasierendes Korrosionsschutzmittel gemäß einem der vorhergehenden Ansprüche, wobei das wasserbasierende Korrosionsschutzmittel eine zweitstufige Filmbildung aufweist.

12. Wasserbasierendes Korrosionsschutzmittel gemäß einem der vorhergehenden Ansprüche, wobei eine autarke Gelbildung nach einer vorangegangener Belastung stattfindet, und das wasserbasierende Korrosionsschutzmittel nach einer erneuter Belastung mit einer hohen Schergeschwindigkeit in einen fließfähigen Zustand unter Absenkung der Viskosität übergeht, vorzugsweise wobei die hohe Schergeschwindigkeit $\dot{\gamma} \geq 500$ s$^{-1}$ ist, und/oder wobei das wasserbasierende Korrosionsschutzmittel eine schnelle Gelbildung bei Schergeschwindigkeiten $\gamma$ von 1 s$^{-1}$ bis 10 s$^{-1}$ bei 1 s $\geq$ t $\leq$ 80 s aufweist.

13. Verfahren zur Herstellung eines wasserbasierenden Korrosionsschutzmittels mit einer gewünschten Viskosität ($\eta$) und/oder gewünschte Laufstrecke (LS), aufweisend oder bestehend aus: Mischen 0,1 bis 10,0 Gew.-% eines grenzflächenaktiven Additivs; 0,0 bis 5,0 Gew.-% eines funktionalisierten Wachses; 1,0 bis 40,0 % Gew.-% eines organischen Bindemittels; 0,1 bis 15,0 Gew.-% eines Korrosionsschutzadditivs; 10,0 bis 60,0 Gew.-% voll entsalzten Wassers (VEW); 1,0 bis 40,0 Gew.-% eines Öls; 1,0 bis 20,0 Gew.-% eines Wachses oder wachsähnlichen Stoffes; 0,0 bis 5,0 Gew.-% eines Neutralisationsmittels; 0,0 bis 5,0 Gew.-% eines pH-Wert Stabilisators; und 0,0 bis 2,0 Gew.-% eines Biozids, bezogen auf 100 Gew.-% des Korrosionsschutzmittels, wobei

$\eta$ = 47,811 [mPa*s] + 4,788 [mPa*s*g$^{-1}$] * (Einwaage des funktionalisierten Wachses [g]) + 6,040 [mPa*s*g$^{-1}$] * (Einwaage des grenzflächenaktiven Additivs [g]) + 3,895 [mPa*s*g$^{-1}$] * (Einwaage des Korrosionsschutzadditivs 1 [g]) + 1,389 [mPa*s*g$^{-1}$] * (Einwaage des pH-Stabilisators [g]) + 0,798 [mPa*s*g$^{-1}$] * (Einwaage des Korrosionsschutzadditives 1 [g]) + 1,629 [mPa*s*g$^{-2}$] * (Einwaage des Wachses oder wachsähnlichen Stoffes [g] * Einwaage des grenzflächenaktiven Additivs [g]) − 0,888 [mPa*s*g$^{-2}$] * (Einwaage des grenzflächenaktiven Additivs [g] * Einwaage des pH-Stabilisators [g]) + 1,018 [mPa*s*g$^{-2}$] * (Einwaage des Korrosionsschutzadditives 1 [g] * Einwaage des Korrosionsschutzadditives 2 [g]);

und

LS [cm] = 17,18 [cm] − 2,325 [cm*g$^{-1}$] * (Einwaage des funktionalisierten Wachses [g]) − 6,625 [cm*g$^{-1}$] * (Einwaage eines grenzflächenaktiven Additivs [g]) + 4,70 * [cm*g$^{-2}$] * (Einwaage des funktionalisierten Wachses [g])$^2$ - 1,625 [cm*g$^{-2}$] * (Einwaage des funktionalisierten Wachses [g] * Einwaage des grenzflächenaktiven Additivs [g]);

wobei $\eta$ = 50 mPa*s $\pm$ 10 mPa*s, und LS = 25 cm $\pm$ 5 cm, wobei die gewünschte Viskosität $\eta$ und die gewünschte Laufstrecke LS gemäß der Beschreibung bestimmt werden.

14. Verfahren nach Anspruch 13, wobei das wasserbasierende Korrosionsschutzmittel einen gewünschten Verlustfaktor tan $\delta$ aufweist, wobei

tan δ [ ]= 0,5936 [ ] − 0,0215 [g⁻¹] * (Einwaage des funktionellen Wachses [g]) + 0,0353 [g⁻¹] * (Einwaage des grenzflächenaktiven Additivs [g]) − 0,303 [g⁻¹] * (Einwaage des Korrosionsschutzadditivs [g]) + 0,0426 [g⁻¹] * (Einwaage des pH-Wert Stabilisators [g]) − 0,0962 [g⁻²] * (Einwaage des funktionellen Wachses [g] * Einwaage des grenzflächenaktiven Additivs [g]) + 0,0436 * [g⁻²] * (Einwaage des funktionellen Wachses [g] * Einwaage des pH-Wert Stabilisators [g]) − 0,0529 [g⁻²] * (Einwaage des grenzflächenaktiven Additivs [g] * Einwaage des grenzflächenaktiven Additivs [g]),

wobei tan δ = 0,5 ± 0,2 ist wobei der gewünschte Verlustfaktor tan δ gemäß der Beschreibung bestimmt wird.

**Claims**

1. A water-based anticorrosion composition, comprising or consisting of:

   0.1 to 10.0 wt% of a surface-active additive,
   0.0 to 5.0 wt% of a functionalized wax,
   1.0 to 40.0 wt% of an organic binder,
   0.1 to 15.0 wt% of an anticorrosion additive,
   10.0 to 50.0 wt% of fully demineralized water (FDW),
   1.0 to 40.0 wt% of an oil,
   1.0 to 20.0 wt% of a wax or waxlike substance,
   0.0 to 5.0 wt% of a neutralizing agent,
   0.0 to 5.0 wt% of a pH stabilizer, and
   0.0 to 2.0 wt% of a biocide, based on 100 wt% of the water-based anticorrosion composition, and
   at least one of a desired viscosity η, a desired travel distance LS and a desired loss factor tan δ, with

$$\eta = 47.811 \ [mPa{*}s] + 4.788 \ [mPa{*}s{*}g^{-1}] * (\text{starting weight of functionalized wax } [g]) + 6.040 \ [mPa{*}s{*}g^{-1}] * (\text{starting weight of surface-active additive } [g]) + 3.895 \ [mPa{*}s{*}g1] * (\text{starting weight of anticorrosion additive 1 } [g]) + 1.389 \ [mPa{*}s{*}g^{-1}] * (\text{starting weight of pH stabilizer } [g]) + 0.798 \ [mPa{*}s{*}g^{-1}] * (\text{starting weight of anticorrosion additive 1 } [g]) + 1.629 \ [mPa{*}s{*}g^{-2}] * (\text{starting weight of wax or waxlike substance } [g] * \text{starting weight of surface-active additive } [g]) - 0.888 \ [mPa{*}s{*}g^{-2}] * (\text{starting weight of surface-active additive } [g] * \text{starting weight of pH stabilizer } [g]) + 1.018 \ [mPa{*}s{*}g^{-2}] * (\text{starting weight of anticorrosion additive 1 } [g] * \text{starting weight of anticorrosion additive 2 } [g]);$$

$$LS \ [cm] = 17.18 \ [cm] - 2.325 \ [cm{*}g^{-1}] * (\text{starting weight of functionalized wax } [g]) - 6.625 \ [cm{*}g^{-1}] * (\text{starting weight of a surface-active additive } [g]) + 4.70 * [cm{*}g^{-2}] * (\text{starting weight of functionalized wax } [g])^2 - 1.625 \ [cm{*}g^{-2}] * (\text{starting weight of functionalized wax } [g] * \text{starting weight of surface-active additive } [g]);$$

and

$$\tan \delta\ [\ ] = 0.5936\ [\ ] - 0.0215\ [g^{-1}] * (\text{starting weight of functional wax [g]}) + 0.0353$$
$$[g^{-1}] * (\text{starting weight of surface-active additive [g]}) - 0.303\ [g^{-1}] * (\text{starting weight of}$$
$$\text{anticorrosion additive [g]}) + 0.0426\ [g^{-1}] * (\text{starting weight of pH stabilizer [g]}) - 0.0962\ [g^{-2}]$$
$$* (\text{starting weight of functional wax [g] * starting weight of surface-active additive}$$
$$[g]) + 0.0436 * [g^{-2}] * (\text{starting weight of functional wax [g] * starting weight of pH stabilizer}$$
$$[g]) - 0.0529\ [g^{-2}] * (\text{starting weight of surface-active additive [g] * starting weight of}$$
$$\text{surface-active additive [g]}),$$

wherein $\eta$ is = 50 mPa*s $\pm$ 10 mPa*s, LS is = 25 cm $\pm$ 5 cm and tan $\delta$ is = 0.5 $\pm$ 0.2,
wherein the desired viscosity $\eta$, the desired travel distance LS and the desired loss factor tan $\delta$ are determined according to the description.

2. The water-based anticorrosion composition as claimed in claim 1, wherein the anticorrosion composition comprises a gel-forming component and the anticorrosion composition after application solidifies independently (without additional energy input and without any further physical changes before the actual drying process by gelling).

3. The water-based anticorrosion composition as claimed in any of claims 1 to 2, wherein the surface-active additive is selected from the group consisting of a nonionic emulsifier, an alkylcarboxylate, an alkylbenzenesulfonate, or an alkyl ether sulfate, the nonionic emulsifier having the general formula R-(O-CH2-CH2-)$_x$-OH, where R is an alkyl radical, aryl radical, carboxylic acid radical or a derivative of a carboxylic acid radical, and $3 \leq x \leq 50$ with $\times \in \mathbb{N}$.

4. The water-based anticorrosion composition as claimed in any of claims 1 to 3, wherein the anticorrosion composition comprises 2.0 to 8.0 wt% of the functional wax.

5. The water-based anticorrosion composition as claimed in any of claims 1 to 4, wherein the neutralizing agent is an amine.

6. The water-based anticorrosion composition as claimed in any of claims 1 to 5, wherein the organic binder is selected from the group consisting of a hydrocarbon resin, polyurethane acrylate, polyester acrylate, epoxy acrylate, unsaturated and saturated polyesters and other functionalized aqueous dispersions.

7. The water-based anticorrosion composition as claimed in any of claims 1 to 6, wherein the anticorrosion composition comprises 0.1 to 10.0 wt% of the anticorrosion additive.

8. The water-based anticorrosion composition as claimed in any of claims 1 to 7, wherein the anticorrosion additive is selected from the group consisting of an alkali metal sulfonate, alkaline earth metal sulfonate, alkali metal carboxylate, alkaline earth metal carboxylate, condensation product of wax acids and/or fatty acids, saturated and/or unsaturated, with aliphatic amines, alcohols or similar functional groups.

9. The water-based anticorrosion composition as claimed in any of claims 1 to 8, wherein the water-based anticorrosion composition comprises 10.0 to 60.0 wt% of fully demineralized water having a conductance of between 0.5 and 5 $\mu$S * cm$^{-1}$ at room temperature.

10. The water-based anticorrosion composition as claimed in any of claims 1 to 9, wherein the oil is selected from the group consisting of a group I oil, group II oil, group III oil, group IV oil and group V oil.

11. The water-based anticorrosion composition as claimed in any of the preceding claims, wherein the water-based anticorrosion composition exhibits two-stage filming.

12. The water-based anticorrosion composition as claimed in any of the preceding claims, wherein an autonomous gelling takes place after a prior loading, and after a further loading with a high shear rate the water-based anticorrosion composition transitions to a fluid state with reduction in viscosity, preferably wherein the high shear rate $\gamma$ is > 500

$s^{-1}$, and/or wherein the water-based anticorrosion composition exhibits rapid gelling at shear rates $\gamma$ of 1 $s^{-1}$ to 10 $s^{-1}$ with $1\ s \geq t \leq 80\ s$.

13. A method for producing a water-based anticorrosion composition having a desired viscosity ($\eta$) and/or desired travel distance (LS), comprising or consisting of: mixing 0.1 to 10.0 wt% of a surface-active additive; 0.0 to 5.0 wt% of a functionalized wax; 1.0 to 40.0 wt% of an organic binder; 0.1 to 15.0 wt% of an anticorrosion additive; 10.0 to 60.0 wt% of fully demineralized water (FDW); 1.0 to 40.0 wt% of an oil; 1.0 to 20.0 wt% of a wax or waxlike substance; 0.0 to 5.0 wt% of a neutralizing agent; 0.0 to 5.0 wt% of a pH stabilizer; and 0.0 to 2.0 wt% of a biocide, based on 100 wt% of the anticorrosion composition, wherein

$\eta$ = 47.811 [mPa*s] + 4.788 [mPa*s*$g^{-1}$]* (starting weight of functionalized wax [g]) + 6.040 [mPa*s*$g^{-1}$] * (starting weight of surface-active additive [g]) + 3.895 [mPa*s*$g^{-1}$] * (starting weight of anticorrosion additive 1 [g]) + 1.389 [mPa*s*$g^{-1}$] * (starting weight of pH stabilizer [g]) + 0.798 [mPa*s*$g^{-1}$] * (starting weight of anticorrosion additive 1 [g]) + 1.629 [mPa*s*$g^{-2}$] * (starting weight of wax or waxlike substance [g] * starting weight of surface-active additive [g]) – 0.888 [mPa*s*$g^{-2}$] * (starting weight of surface-active additive [g] * starting weight of pH stabilizer [g]) + 1.018 [mPa*s*$g^{-2}$] * (starting weight of anticorrosion additive 1 [g] * starting weight of anticorrosion additive 2 [g]);

and

LS [cm] = 17.18 [cm] – 2.325 [cm*$g^{-1}$] * (starting weight of functionalized wax [g]) – 6.625 [cm*$g^{-1}$] * (starting weight of a surface-active additive [g]) + 4.70 * [cm*$g^{-2}$] * (starting weight of functionalized wax [g])$^2$ – 1.625 [cm*$g^{-2}$] * (starting weight of functionalized wax [g] * starting weight of surface-active additive [g]);

wherein $\eta$ is = 50 mPa*s $\pm$ 10 mPa*s, and LS is = 25 cm $\pm$ 5 cm, wherein the desired viscosity $\eta$ and the desired travel distance LS are determined according to the description.

14. The method of claim 13, wherein the water-based anticorrosion composition has a desired loss factor tan $\delta$ wherein

tan $\delta$ [ ] = 0.5936 [ ] – 0.0215 [$g^{-1}$] * (starting weight of functional wax [g]) + 0.0353 [$g^{-1}$] * (starting weight of surface-active additive [g]) – 0.303 [$g^{-1}$] * (starting weight of anticorrosion additive [g]) + 0.0426 [$g^{-1}$] * (starting weight of pH stabilizer [g]) – 0.0962 [$g^{-2}$] * (starting weight of functional wax [g] * starting weight of surface-active additive [g]) + 0.0436 * [$g^{-2}$] * (starting weight of functional wax [g] * starting weight of pH stabilizer [g]) – 0.0529 [$g^{-2}$] * (starting weight of surface-active additive [g] * starting weight of surface-active additive [g]),

wherein tan $\delta$ is = 0.5 $\pm$ 0.2, wherein the desired loss factor tan $\delta$ is determined according to the description.

**Revendications**

1. Agent, à base d'eau, de protection contre la corrosion, présentant ou constitué par

0,1 à 10,0% en poids d'un additif tensioactif,
0,0 à 5,0% en poids d'une cire fonctionnalisée,
1,0 à 40,0% en poids d'un liant organique,
0,1 à 15,0% en poids d'un additif de protection contre la corrosion,
10,0 à 50,0% en poids d'eau déminéralisée (ED),
1,0 à 40,0% en poids d'une huile,
1,0 à 20,0% en poids d'une cire ou d'une substance analogue à une cire,
0,0 à 5,0% en poids d'un agent de neutralisation,
0,0 à 5,0% en poids d'un stabilisant du pH et
0,0 à 2,0% en poids d'un biocide, par rapport à 100% en poids de l'agent, à base d'eau, de protection contre la corrosion et
présentant au moins un élément parmi une viscosité η souhaitée, un étalement ÉTAL souhaité et un facteur de perte tan δ souhaité, où

$$\eta = 47{,}811\ [mPa{*}s] + 4{,}788\ [mPa{*}s{*}g^{-1}] * (\text{pesée de la cire fonctionnalisée [g]}) + 6{,}040\ [mPa{*}s{*}g^{-1}] * (\text{pesée de l'additif tensioactif [g]}) + 3{,}895\ [mPa{*}s{*}g^{-1}] * (\text{pesée de l'additif de protection contre la corrosion 1 [g]}) + 1{,}389\ [mPa{*}s{*}g^{-1}] * (\text{pesée du stabilisant du pH [g]}) + 0{,}798\ [mPa{*}s{*}g^{-1}] * (\text{pesée de l'additif de protection contre la corrosion 1 [g]}) + 1{,}629\ [mPa{*}s{*}g^{-2}] * (\text{pesée de la cire ou d'une substance analogue à une cire [g]} * \text{pesée de l'additif tensioactif [g]}) - 0{,}888\ [mPa{*}s{*}g^{-2}] * (\text{pesée de l'additif tensioactif [g]} * \text{pesée du stabilisant du pH [g]}) + 1{,}018\ [mPa{*}s{*}g^{-2}] * (\text{pesée de l'additif de protection contre la corrosion 1 [g]} * \text{pesée de l'additif de protection contre la corrosion 2 [g]})\ ;$$

$$\text{ÉTAL [cm]} = 17{,}18\ [cm] - 2{,}325\ [cm{*}g^{-1}] * (\text{pesée de la cire fonctionnalisée [g]}) - 6{,}625\ [cm{*}g^{-1}] * (\text{pesée d'un additif tensioactif [g]}) + 4{,}70 * [cm{*}g^{-2}] * (\text{pesée de la cire fonctionnalisée [g]})^2 - 1{,}625\ [cm{*}g^{-2}] * (\text{pesée de la cire fonctionnalisée [g]} * \text{pesée de l'additif tensioactif [g]})\ ;$$

et

$$\tan \delta\ [\ ] = 0{,}5936\ [\ ] - 0{,}0215\ [g^{-1}] * (\text{pesée de la cire fonctionnelle [g]}) + 0{,}0353\ [g^{-1}] * (\text{pesée de l'additif tensioactif [g]}) - 0{,}303\ [g^{-1}] * (\text{pesée de l'additif de protection contre la corrosion [g]}) + 0{,}0426\ [g^{-1}] * (\text{pesée du stabilisant du pH [g]}) - 0{,}0962\ [g^{-2}] * (\text{pesée de la cire fonctionnelle [g]} * \text{pesée de l'additif tensioactif [g]}) + 0{,}0436 * [g^{-2}] * (\text{pesée de la cire fonctionnelle [g]} * \text{pesée du stabilisant du pH [g]}) - 0{,}0529\ [g^{-2}] * (\text{pesée de l'additif tensioactif [g]} * \text{pesée de l'additif tensioactif [g]}),$$

où η = 50 mPa*s ± 10 mPa*s, ÉTAL = 25 cm ± 5 cm et tan δ = 0,5 ± 0,2,
la viscosité η souhaitée, l'étalement ÉTAL souhaité et le facteur de perte tan δ souhaité étant déterminés selon la description.

2. Agent, à base d'eau, de protection contre la corrosion selon la revendication 1, l'agent de protection contre la corrosion présentant un composant gélifiant et l'agent de protection contre la corrosion se solidifiant de manière autonome après application (sans introduction supplémentaire d'énergie et sans autres modifications matérielles quelconques avant le processus de séchage en soi par formation de gel).

**3.** Agent, à base d'eau, de protection contre la corrosion selon l'une quelconque des revendications 1 à 2, l'additif tensioactif étant choisi dans le groupe constitué par un émulsifiant non ionique, un carboxylate de dialkyle, un benzènesulfonate d'alkyle ou un éther-sulfate d'alkyle, l'émulsifiant non ionique présentant la formule générale R-(O-CH2-CH2-)$_x$-OH, dans laquelle R représente un radical alkyle, un radical aryle, un radical acide carboxylique ou un dérivé d'un radical acide carboxylique et $3 \leq x \leq 50$, avec x e N.

**4.** Agent, à base d'eau, de protection contre la corrosion selon l'une quelconque des revendications 1 à 3, l'agent de protection contre la corrosion présentant 2,0 à 8,0% en poids de la cire fonctionnelle.

**5.** Agent, à base d'eau, de protection contre la corrosion selon l'une quelconque des revendications 1 à 4, l'agent de neutralisation étant une amine.

**6.** Agent, à base d'eau, de protection contre la corrosion selon l'une quelconque des revendications 1 à 5, le liant organique étant choisi dans le groupe constitué par une résine hydrocarbonée, un polyuréthane-acrylate, un polyester-acrylate, un époxyacrylate, les polyesters insaturés ou saturés et d'autres dispersions aqueuses fonctionnalisées.

**7.** Agent, à base d'eau, de protection contre la corrosion selon l'une quelconque des revendications 1 à 6, l'agent de protection contre la corrosion contenant 0,1 à 10,0% en poids de l'additif de protection contre la corrosion.

**8.** Agent, à base d'eau, de protection contre la corrosion selon l'une quelconque des revendications 1 à 7, l'additif de protection contre la corrosion étant choisi dans le groupe constitué par un sulfonate de métal alcalin, un sulfonate de métal alcalino-terreux, un carboxylate de métal alcalin, un carboxylate de métal alcalino-terreux, un produit de condensation d'acides de cire et/ou d'acides gras saturés et/ou insaturés par des amines aliphatiques, des alcools aliphatiques ou des groupes fonctionnels analogues.

**9.** Agent, à base d'eau, de protection contre la corrosion selon l'une quelconque des revendications 1 à 8, l'agent, à base d'eau, de protection contre la corrosion présentant 10,0 à 60,0% en poids d'eau déminéralisée présentant une valeur de conductivité entre 0,5 et 5 $\mu$S * cm$^{-1}$ à température ambiante.

**10.** Agent, à base d'eau, de protection contre la corrosion selon l'une quelconque des revendications 1 à 9, l'huile étant choisie dans le groupe constitué par une huile du groupe I, une huile du groupe II, une huile du groupe III, une huile du groupe IV et une huile du groupe V.

**11.** Agent, à base d'eau, de protection contre la corrosion selon l'une quelconque des revendications précédentes, l'agent, à base d'eau, de protection contre la corrosion présentant une formation de film en deux étapes.

**12.** Agent, à base d'eau, de protection contre la corrosion selon l'une quelconque des revendications précédentes, une formation de gel autonome après une sollicitation préalable ayant lieu et l'agent, à base d'eau, de protection contre la corrosion, après une nouvelle sollicitation par une vitesse de cisaillement élevée, passant dans un état fluide avec diminution de la viscosité, la vitesse de cisaillement élevée étant de préférence $\gamma \geq 500$ s$^{-1}$, et/ou l'agent, à base d'eau, de protection contre la corrosion présentant une formation de gel rapide à des vitesses de cisaillement $\gamma$ de 1 s$^{-1}$ à 10 s$^{-1}$ à 1 s $\geq$ t $\leq$ 80 s.

**13.** Procédé pour la préparation d'un agent, à base d'eau, de protection contre la corrosion présentant une viscosité souhaitée ($\eta$) et/ou un étalement souhaité (ÉTAL), présentant ou constitué par : mélange de 0,1 à 10,0% en poids d'un additif tensioactif ; 0,0 à 5,0% en poids d'une cire fonctionnalisée ; 1,0 à 40,0% en poids d'un liant organique; 0,1 à 15,0% en poids d'un additif de protection contre la corrosion ; 10,0 à 60,0% en poids d'eau déminéralisée (ED) ; 1,0 à 40,0% en poids d'une huile ; 1,0 à 20,0% en poids d'une cire ou d'une substance analogue à une cire ; 0,0 à 5,0% en poids d'un agent de neutralisation ; 0,0 à 5,0% en poids d'un stabilisant du pH ; et 0,0 à 2,0% en poids d'un biocide, par rapport à 100% en poids de l'agent de protection contre la corrosion, où

$$\eta = 47{,}811 \text{ [mPa*s]} + 4{,}788 \text{ [mPa*s*g}^{-1}\text{]} * \text{(pesée de la cire fonctionnalisée [g])} + 6{,}040 \text{ [mPa*s*g}^{-1}\text{]} * \text{(pesée de l'additif tensioactif [g])} + 3{,}895 \text{ [mPa*s*g}^{-1}\text{]} * \text{(pesée de l'additif de protection contre la corrosion 1 [g])} + 1{,}389 \text{ [mPa*s*g}^{-1}\text{]} * \text{(pesée du stabilisant du pH [g])} + 0{,}798 \text{ [mPa*s*g}^{-1}\text{]} * \text{(pesée de l'additif de protection contre la corrosion 1 [g])} + 1{,}629 \text{ [mPa*s*g}^{-2}\text{]} * \text{(pesée de la cire ou d'une substance analogue à une cire [g] * pesée de l'additif tensioactif [g])} - 0{,}888 \text{ [mPa*s*g}^{-2}\text{]} * \text{(pesée de l'additif tensioactif [g] * pesée du stabilisant du pH [g])} + 1{,}018 \text{ [mPa*s*g}^{-2}\text{]} * \text{(pesée de l'additif de protection contre la corrosion 1 [g] * pesée de l'additif de protection contre la corrosion 2 [g])} \text{ ;}$$

et

$$\text{ÉTAL [cm]} = 17{,}18 \text{ [cm]} - 2{,}325 \text{ [cm*g}^{-1}\text{]} * \text{(pesée de la cire fonctionnalisée [g])} - 6{,}625 \text{ [cm*g}^{-1}\text{]} * \text{(pesée d'un additif tensioactif [g])} + 4{,}70 * \text{[cm*g}^{-2}\text{]} * \text{(pesée de la cire fonctionnalisée [g])}^2 - 1{,}625 \text{ [cm*g}^{-2}\text{]} * \text{(pesée de la cire fonctionnalisée [g] * pesée de l'additif tensioactif [g])} \text{ ;}$$

où $\eta$ = 50 mPa*s $\pm$ 10 mPa*s et ÉTAL = 25 cm $\pm$ 5 cm, la viscosité $\eta$ souhaitée et l'étalement ÉTAL souhaité étant déterminés selon la description.

**14.** Procédé selon la revendication 13, l'agent, à base d'eau, de protection contre la corrosion présentant un facteur de perte tan $\delta$, où

$$\tan \delta \text{ [ ]} = 0{,}5936 \text{ [ ]} - 0{,}0215 \text{ [g}^{-1}\text{]} * \text{(pesée de la cire fonctionnelle [g])} + 0{,}0353 \text{ [g}^{-1}\text{]} * \text{(pesée de l'additif tensioactif [g])} - 0{,}303 \text{ [g}^{-1}\text{]} * \text{(pesée de l'additif de protection contre la corrosion [g])} + 0{,}0426 \text{ [g}^{-1}\text{]} * \text{(pesée du stabilisant du pH [g])} - 0{,}0962 \text{ [g}^{-2}\text{]} * \text{(pesée de la cire fonctionnelle [g] * pesée de l'additif tensioactif [g])} + 0{,}0436 * \text{[g}^{-2}\text{]} * \text{(pesée de la cire fonctionnelle [g] * pesée du stabilisant du pH [g])} - 0{,}0529 \text{ [g}^{-2}\text{]} * \text{(pesée de l'additif tensioactif [g] * pesée de l'additif tensioactif [g])},$$

tan $\delta$ = 0,5 $\pm$ 0,2, le facteur de perte tan $\delta$ souhaité étant déterminé selon la description.

Fig. 1

Haupteffektediagramm für Viskosität
Datenmittelwerte

Fig. 2

Fig. 3

Haupteffektediagramm für LS
Datenmittelwerte

Fig. 4

Fig. 5

EP 3 980 498 B1

Viskositätskurven Einwaagen grenzflächenaktives Additiv - ± 20%

—◆— Grenzflächenaktives Additiv - Standard
—■— Grenzflächenaktives Additiv - 80%
—▲— Grenzflächenaktives Additiv - 120%

## Fig. 6

Viskosität und Laufstrecke in Abhängigkeit der Einwaage
grenzflächenaktives Additiv ± 20%

Grenzflächenaktives Additiv

▨ Viskosität bei Scherrate 1 1/s
⧄ Viskosität bei Scherrate 1.000 1/s
— Laufstrecke

# Fig. 7

A) Standardrezeptur    B) Emulgatoreinwaage 80%

# Fig. 8

**Fig. 9**

Viskositäten der Materialvarianten in Abhängigkeit der Scherrate

Referenz
Produktvariante 1
Produktvariante 1 + Additiv 1
Produktvariante 1 + Additiv 2
□    Produktvariante 2
◇    Produktvariante 2 + Additiv 1
▲    Produktvariante 2 + Additiv 2

Fig. 10

Viskositäten der Materialvarianten in Abhängigkeit der Scherrate

——————— Referenz nach Druckbelastung
— — — — — Produktvariante 1 nach Druckbelastung
— · — · — · Produktvariante 1 + Additiv 1 nach Druckbelastung
············· Produktvariante 1 + Additiv 2 nach Druckbelastung
  □   Produktvariante 2 nach Druckbelastung
  ◇   Produktvariante 2 + Additiv 1 nach Druckbelastung
  ▲   Produktvariante 2 + Additiv 2 nach Druckbelastung

# Fig. 11

Entwicklung von Viskosität und Laufstrecke vor und nach mechanischer Beanspruchung

**Fig. 12**

Multiple Regression für tan δ
Bericht der Effekte
HaupteffekteWechselwirkungsdiagramme für tan δ
Beschreibt, wie sich tan d ändert, wenn Sie die Einstellungen von zwei X-Variablen ändern.

Haupteffektediagramm für tan δ
Beschreibt, wie sich tan d ändert, wenn Sie die Einstellungen einer X-Variablen ändern.
Wenn eine Wechselwirkung zwischen X-Variablen besteht, bestimmen Sie mithilfe von Wechselwirkungsdiagrammen die optimalen Variableneinstellungen.

Fig. 13

Strukturaufbau in Abhängigkeit der Einwaage
grenzflächenaktives Additiv ± 20%

Fig. 14

Fig. 15

**Fig. 16**

Geöffneter Testkörper
Penetration nach 24 h

Geöffneter Testkörper
Penetration nach 24 h
unter UV-Licht

Fig. 17

| Substrat | Stahl Q Lab Q-Panel R 36 | GARDOBOND HDG 6 | GARDOBOND HDG 6 | Stahl Q-Panel R 36 |
|---|---|---|---|---|
| | | | | |
| | Bleche mit getrockneter wHRK nach SST | | Bleche nach SST - entkonserviert | |

Ergebnisse nach 480 h SST gemäß DIN EN ISO 9227 bei einer Schichtdicke von $d_{min}$ = 50 µm

# Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19541907 A1
- CN 106800784 A
- US 10000643 B1
- EP 2047981 A1
- EP 1842881 A1
- WO 9715499 A1
- JP H03126773 A


**In der Beschreibung aufgeführte Nicht-Patentliteratur**

- Untersuchung der Rheologie und Filmbildung eines wasserbasierenden Korrosionsschutzsystems am Beispiel einer Wachs-Dispersion. **GRUSECK, D.** Dissertation. Universität Paderborn, 2018
- **L. IVANOVSZKY.** Wachsenzyklopädie. Verlag für chemische Industrie, 1954, vol. 1
- Corrosion Inhibitors and Rust Preventatives in Leslie R. Rudnick. **COSTELLO M.T.** Lubricant Additives, Chemistry and Applications. CRC Press Taylor and Francis Group, 2008, 420-431
- **ZORLL, U.** Römpp Lexikon-Lacke und Druckfarben. Thieme, 1998
- Harze, synthetische. **BARENDRECHT, W. ; COLLIN, G. ; DUNLOP, A. P. ; MCKILLIP, W. J. ; WÖLLNER, J. ; STOYE, D. ; ALLWINN, R. ; GRIEBSCH E. ; BARTHOLOMÉ E. ; BIEKERT, E.** Ullmanns Enzyklopädie der technischen Chemie. Verlag Chemie, 1976, vol. 12, 539-555
- **ZORLL U.** Römpp Lexikon-Lacke und Druckfarben. Thieme, 1998
- **MÜLLER, B. ; POTH,U.** Lackformulierung & Lackrezeptur. Vincentz Network GmbH & Co, 2009
- **GOLDSCHMIDT A ; H.J. STREITBERGER.** BASF Handbuch der Lackiertechnik. Vincentz Network GmbH & Co, 2014
- **THIEKE, B.** Makromolekulare Chemie-Eine Einführung. VCH Verlagsgesellschaft mbH, 1997
- **POTH, U. ; SCHWALM; R. ; SCHWARTZ, M.** Acrylatharze. Vincentz Network, 2011
- **DIESTLER, D. ; EIDAM, N. ; KIRCHNER, W. ; KUROPKA,R. ;LANMAN, A. ;LUTZ, H. ;MÜLLER, G. ; PETEREIT, H. U. ; PRANTL, B ; SCHMIDT-THÜMMES, J.** Wässrige Ploymerdispersionen. Willey-VCH Verlag GmbH, 1999, 1-30
- **BROCK, T. ; GROTEKLAES, M. ; MISCHKE, P.** Lehrbuch der Lacktechnologie. Curt R. Vincentz Verlag, 1998
- Corrosion Inhibitors and Rust Preventatives in Leslie R. Rudnick. **COSTELLO M.T.** Lubricant Additives, Chemistry and Applications. CRC Press Taylor and Francis Group, 2008, 420-431
- **BIELEMAN J.** Lackadditive. WILEY-VCH Verlag GmbH, 1998
- Petrolsulfonate bis Plutonium. **BARTHOLOMÉ E. ; BIEKERT E. ; HELLMANN H. ; LEY H. ; WEIGERT W.M.** Ullmanns Enzyklopädie der technischen Chemie. Verlag Chemie, vol. 18, 1-2
- **ZORLL, U.** Römpp Lexikon-Lacke und Druckfarben. Georg Thieme Verlag, 1998
- **BARTHOLOMÉ E. ; BIEKERT, E. ; HELLMANN, H ; LEY, H. ; WEIGERT, W.M.** Ullmanns Enzyklopädie der technischen Chemie. Verlag Chemie, vol. 24, 1-49
- **MÜLLER B. ; POTH U.** Lackformulierung & Lackrezeptur. Vincentz Network GmbH & Co, 2009
- **GOLDSCHMIDT A. ; H.J. STREITBERGER.** BASF Handbuch der Lackiertechnik. Vincentz Network GmbH & Co, 2014
- **RELEVANZ GOLDSCHMIDT A ; H.J. STREITBERGER.** BASF Handbuch der Lackiertechnik. Vincentz Network GmbH & Co, 2014
- **FALBE J. ; REGNITZ M.** Römpp Chemielexikon. Georg Thieme Verlag, 1992, vol. 2
- Rheometrie. **GERTH, C. ; BARTHOLOMÉ E. ; BIEKERT, E. ; HELLMANN, H ; LEY, H. ; WEIGERT, W.M. ; WEISE, E.** Ullmanns Enzyklopädie der technischen Chemie. Verlag Chemie, 1980, vol. 5, 755-777
- **MEZGER T.** Das Rheologiehandbuch. Vincentz Network, 2010
- Stabilitätsbeurteilung von O/W-Cremes auf Basis der wasserhaltigen hydrophilen Salbe DAB 1996. **ROSE, C.** Dissertation. Technische Universität Carola-Wilhelmina zu Braunschweig, 1999
- Stabilitätsbeurteilung von O/W-Cremes auf Basis der wasserhaltigen hydrophilen Salbe DAB 1996. **ROSE, C.** Dissertation. Technische Universität Carola-Wilhelmina zu Braunschweig, 1999